(19) **Europäisches Patentamt / European Patent Office / Office européen des brevets**

(11) **EP 1 410 331 B1**

(12) **FASCICULE DE BREVET EUROPEEN**

(45) Date de publication et mention de la délivrance du brevet:
**12.08.2015 Bulletin 2015/33**

(21) Numéro de dépôt: **02745485.9**

(22) Date de dépôt: **05.06.2002**

(51) Int Cl.:
***G06T 5/20*** *(2006.01)*

(86) Numéro de dépôt international:
**PCT/FR2002/001908**

(87) Numéro de publication internationale:
**WO 2003/007243 (23.01.2003 Gazette 2003/04)**

(54) **PROCEDE ET SYSTEME POUR MODIFIER UNE IMAGE NUMERIQUE EN PRENANT EN COMPTE SON BRUIT**

VERFAHREN UND VORRICHTUNG ZUR ÄNDERUNG EINES NUMERISCHEN BILDES UNTER BERÜCKSICHTIGUNG DES GERÄUSCHES

METHOD AND SYSTEM FOR MODIFYING A DIGITAL IMAGE TAKING INTO ACCOUNT ITS NOISE

(84) Etats contractants désignés:
**AT BE CH CY DE DK ES FI FR GB GR IE IT LI LU MC NL PT SE TR**

(30) Priorité: **12.07.2001 FR 0109291**
**12.07.2001 FR 0109292**

(43) Date de publication de la demande:
**21.04.2004 Bulletin 2004/17**

(73) Titulaire: **DxO Labs**
**92100 Boulogne Billancourt (FR)**

(72) Inventeurs:
• **CHANAS, Laurent**
**F-78800 HOUILLES (FR)**
• **GUICHARD, Frédéric**
**F-75012 PARIS (FR)**
• **MOISAN, Lionel**
**F-75014 PARIS (FR)**

• **LIEGE, Bruno**
**F-75015 PARIS (FR)**

(74) Mandataire: **Deschamps, Samuel et al**
**Ipside**
**29, rue de Lisbonne**
**75008 Paris (FR)**

(56) Documents cités:
EP-A- 0 640 908     US-A- 5 461 655
US-A- 5 694 484     US-A- 6 069 982
US-A- 6 115 104

• **BO-CAI GAO: 'An operational method for estimating signal to noise ratios from data acquired with imaging spectrometers' REMOTE SENSING OF ENVIRONMENT vol. 43, no. 1, 01 Janvier 1993, pages 23 - 33, XP055039783 DOI: 10.1016/0034-4257(93)90061-2 ISSN: 0034-4257**

## Description

*Domaine concerné, problème posé*

La présente invention concerne un procédé et un système pour modifier une image numérique en prenant en compte son bruit.

On connaît dans l'état de la technique le brevet américain N° US 5 694 484, qui concerne un système et un procédé pour traiter automatiquement des données d'image afin de fournir des images de qualité optimale.

L'invention concerne un procédé pour calculer une image transformée à partir d'une image numérique et d'informations formatées relatives à des défauts d'une chaîne d'appareils. La chaîne d'appareils comporte des appareils de capture d'image et/ou des appareils de restitution d'image. La chaîne d'appareils comporte au moins un appareil. Le procédé comprend l'étape de déterminer automatiquement des données caractéristiques à partir des informations formatées et/ou de l'image numérique. Les données caractéristiques sont ci-après dénommées les données caractéristiques du bruit.

Il résulte de la combinaison des traits techniques que l'image transformée ne présente pas de défaut visible ou gênant, notamment de défauts liés au bruit, pour son utilisation ultérieure.

Estimation du bruit en fonction de l'image

De préférence, selon l'invention, le procédé comprend en outre, pour déterminer les données caractéristiques du bruit, les étapes suivantes :

- l'étape de sélectionner sur l'image numérique des zones d'analyse, notamment en fonction des appareils de la chaîne d'appareils et/ou des informations formatées,
- l'étape de calculer des variations locales de luminance sur les zones d'analyse,
- l'étape de déduire les données caractéristiques du bruit en fonction d'un calcul statistique d'occurrence des variations locales sur l'ensemble des zones d'analyse.

Estimation du bruit à partir de l'image Histogramme de variation de luminance

De préférence, selon l'invention, le procédé comprend en outre, pour déduire les données caractéristiques du bruit, les étapes suivantes :

- l'étape de construire un histogramme des occurrences des variations locales de luminance,
- l'étape de sélectionner sur l'histogramme au moins une partie de la partie située avant le premier maximum local, y compris celui-ci.

Il résulte de la combinaison des traits techniques que l'on obtient ainsi les variations locales de luminance liées au bruit.

Estimation du bruit à partir de l'image Bruit fonction de la luminance

De préférence, selon l'invention, le procédé comprend en outre, pour sélectionner sur l'image numérique des zones d'analyse, l'étape de classer les zones d'analyse selon leur luminance moyenne, de manière à obtenir des classes. Le procédé comprend en outre :

- l'étape de déduire les données caractéristiques du bruit pour les zones d'analyse appartenant à la même classe,
- l'étape d'itérer la précédente étape pour chacune des classes.

Il résulte de la combinaison des traits techniques que l'on obtient ainsi des données caractéristiques du bruit fonction de la luminance.

Informations formatées comprenant des données caractéristiques du bruit

De préférence, selon l'invention les informations formatées comporte les données caractéristiques du bruit.

Clippage - Problème posé

De préférence, selon l'invention le procédé comprend en outre l'étape de mettre en oeuvre un algorithme de transformation pour réaliser une image numérique intermédiaire. L'algorithme présente l'avantage d'apporter des modifications souhaitées à l'image numérique mais présente l'inconvénient d'augmenter le bruit de l'image numérique intermédiaire.

Clippage - Solution

De préférence, selon l'invention, pour calculer une image transformée à partir de l'image numérique intermédiaire obtenue à partir de l'image numérique, le procédé comprend en outre l'étape de mettre en oeuvre une fonction ayant pour objet de modifier la luminance de l'image numérique et ayant au moins pour arguments :

- la luminance d'un point de l'image numérique intermédiaire,
- les luminances d'une zone autour du point correspondant de l'image numérique,
- des données caractéristiques du bruit.

Il résulte de la combinaison des traits techniques que l'on obtient ainsi une image transformée présentant les caractéristiques souhaitées et un niveau de bruit contrôlé.

De préférence, selon l'invention, l'image numérique intermédiaire est composée de l'image numérique.

Correction du flou

De préférence, selon l'invention, le procédé est plus particulièrement destiné à calculer une image transformée corrigée de tout ou partie du flou. Le procédé comprend en outre les étapes suivantes :

- l'étape de sélectionner dans l'image numérique des zones d'images à corriger,
- l'étape de construire, pour chaque zone d'images à corriger ainsi sélectionnée, un profil de rehaussement à partir des informations formatées et des données caractéristiques du bruit,
- l'étape de corriger chaque zone d'images à corriger ainsi sélectionnée en fonction du profil de rehaussement , de manière à obtenir une zone d'image transformée,
- l'étape de combiner les zones d'image transformées de manière à obtenir l'image transformée de l'image numérique.

Il résulte de la combinaison des traits techniques que l'on obtient ainsi une image transformée déflouée.

Calcul du profil de rehaussement

De préférence, selon l'invention, les informations formatées permettent de déterminer, pour chaque zone image à corriger , une représentation image et une représentation de référence dans une base relative à la zone d'image à corriger

Le procédé est tel que, pour construire un profil de rehaussement à partir des informations formatées et du bruit, il comprend en outre les étapes suivantes :

- l'étape de déterminer, le cas échéant en tenant compte du bruit, à partir de la représentation image et de la représentation de référence un profil,
- l'étape de déterminer un opérateur paramétré permettant de passer de la représentation image au profil.

L'ensemble des valeurs des paramètres de l'opérateur paramétré compose le profil de rehaussement PR.

Correction du flou à partir du profil de rehaussement

De préférence, selon l'invention, lé procédé comprend en outre, pour corriger chaque zone d'images à corriger en fonction du profil de rehaussement, les étapes suivantes :

- l'étape de représenter au moins en partie la zone d'image à corriger dans la base,
- l'étape d'appliquer l'opérateur paramétré à la représentation obtenue au terme de l'étape précédente, de manière à obtenir une représentation corrigée de la zone d'image à corriger,
- l'étape de substituer la représentation de la zone d'image à corriger par la représentation corrigée de la zone d'image à corriger de manière à obtenir une zone d'image transformée.

Clippage dans le cas du flou

De préférence, selon l'invention, le procédé comprend en outre l'étape de calculer une image ayant un niveau de bruit contrôlé, à partir de l'image transformée, en mettant en oeuvre une fonction ayant pour objet de modifier la luminance de l'image numérique et ayant au moins pour arguments :

- la luminance d'un point de l'image numérique transformée,
- les luminances d'une zone autour du point correspondant de l'image numérique,
- des données caractéristiques du bruit.

Il résulte de la combinaison des traits techniques que l'on obtient ainsi une image déflouée et ayant un niveau de bruit contrôlé.

Caractéristiques variables influant sur le bruit et/ou sur le flou

Les informations formatées peuvent dépendre de valeurs de caractéristiques variables selon l'image numérique, notamment la taille de l'image numérique. De préférence dans ce cas, selon l'invention, le procédé comprend en outre l'étape de déterminer la ou les valeur(s) des caractéristiques variables, pour l'image numérique.
Ainsi, la mise en oeuvre du procédé pour des informations formatées comprenant des données caractéristiques du bruit dépendant de caractéristiques variables selon l'image numérique est ramenée à la mise en oeuvre du procédé pour des données caractéristiques du bruit ne dépendant d'aucune caractéristique variable.

Réduction de la dynamique dans le cas d'un appareil de restitution

De préférence, selon l'invention, le procédé est plus particulièrement destiné à calculer une image transformée à partir d'une image numérique et d'informations formatées relatives à des défauts d'une chaîne d'appareil comprenant au moins un appareil de restitution d'image. L'appareil de restitution a une dynamique. L'image transformée a une dynamique. Le procédé comprend en outre l'étape d'adapter la dynamique de l'image transformée à la dynamique dudit appareil de restitution. Il résulte de la combinaison des traits techniques que la restitution, par l'appareil de restitution, de l'image transformée présente des hautes fréquences renforcées. Il résulte également de la combinaison des traits techniques que l'appareil de restitution peut restituer des images de caractères avec moins de flou.

Correction du bruit et/ou flou poly-chromatique

L'invention s'applique au cas d'une image numérique composée de planes couleurs. L'application consiste à appliquer le procédé selon l'invention à chaque plan couleur. On obtient ainsi une image transformée à partir de l'image numérique. Il résulte de la combinaison des traits techniques que l'image transformée présente les caractéristiques souhaitées et un niveau de bruit contrôlé.

Système

L'invention concerne un système pour calculer une image transformée à partir d'une image numérique et d'informations formatées relatives à des défauts d'une chaîne d'appareils. La chaîne d'appareils comporte des appareils de capture d'image et/ou des appareils de restitution d'image. La chaîne d'appareils comporte au moins un appareil. Le système comprend des moyens de traitement informatique pour déterminer automatiquement des données caractéristiques à partir des informations formatées et/ou de l'image numérique. Les données caractéristiques sont ci-après dénommées les données caractéristiques du bruit.
L'image transformée ne présente pas de défaut visible ou gênant, notamment de défauts liés au bruit, pour son utilisation ultérieure.

Estimation du bruit en fonction de l'image

De préférence, selon l'invention, les moyens de traitement informatique pour déterminer les données caractéristiques du bruit comprennent

- des moyens de sélection pour sélectionner sur l'image numérique des zones d'analyse , notamment en fonction des appareils de la chaîne d'appareils et/ou des informations formatées,

- des moyens de calcul pour calculer des variations locales de luminance sur les zones d'analyse,
- des moyens de déduction pour déduire les données caractéristiques du bruit en fonction d'un calcul statistique d'occurrence des variations locales sur l'ensemble des zones d'analyse

Estimation du bruit à partir de l'image Histogramme de variation de luminance

De préférence, selon l'invention, les moyens de déduction comprennent en outre :

- des moyens pour construire un histogramme des occurrences des variations locales de luminance,
- des moyens de sélection pour sélectionner sur l'histogramme au moins une partie de la partie située avant le premier maximum local, y compris celui-ci.

Estimation du bruit à partir de l'image Bruit fonction de la luminance

De préférence, selon l'invention, le Système comprend en outre, pour sélectionner sur l'image numérique des zones d'analyse, des moyens de classement pour classer les zones d'analyse selon leur luminance moyenne, de manière à obtenir des classes. Le système comprend en outre des moyens de traitement informatique pour :

- déduire les données caractéristiques du bruit pour les zones d'analyse appartenant à la même classe,
- itérer la précédente étape pour chacune des classes.

Informations formatées comprennent les données caractéristiques du bruit

De préférence, selon l'invention, les informations formatées comportent les données caractéristiques du bruit.

Clippage - Problème posé

De préférence, selon l'invention, le système comprend en outre des moyens de traitement informatique mettant en oeuvre un algorithme de transformation pour réaliser une image numérique intermédiaire. L'algorithme présente l'avantage d'apporter des modifications souhaitées à l'image numérique mais présente l'inconvénient d'augmenter le bruit de l'image numérique intermédiaire.

Clippage - Solution

De préférence, selon l'invention pour calculer une image transformée à partir de l'image numérique intermédiaire obtenue à partir de l'image numérique, le système comprend des moyens de calcul mettant en oeuvre une fonction ayant pour objet de modifier la luminance de l'image numérique et ayant au moins pour arguments :

- la luminance d'un point de l'image numérique intermédiaire,
- les luminances d'une zone autour du point correspondant de l'image numérique,
- des données caractéristiques du bruit.

De préférence, selon l'invention l'image numérique intermédiaire est composée de l'image numérique.

Correction du flou

De préférence, selon l'invention, le système est plus particulièrement destiné à calculer une image transformée corrigée de tout ou partie du flou. Le système comprend en outre :

- des moyens de sélection pour sélectionner dans l'image numérique des zones d'images à corriger ,
- des moyens de calcul pour construire, pour chaque zone d'images à corriger ainsi sélectionnée, un profil de rehaussement à partir des informations formatées et des données caractéristiques du bruit,

Le système comprend en outre des moyens de traitement informatique pour :

- corriger chaque zone d'images à corriger ainsi sélectionnée en fonction du profil de rehaussement , de manière à obtenir une zone d'image transformée, et pour

- combiner les zones d'image transformées de manière à obtenir l'image transformée de l'image numérique.

Calcul du profil de rehaussement

De préférence, selon l'invention, les informations formatées permettant de déterminer, pour chaque zone image à corriger , une représentation image et une représentation de référence dans une base relative à la zone d'image à corriger . Le système est tel que les moyens de calcul pour construire un profil de rehaussement à partir des informations formatées et du bruit, comprennent en outre des moyens pour déterminer:

- un profil, le cas échéant en tenant compte du bruit, à partir de la représentation image et de la représentation de référence
- un opérateur paramétré permettant de passer de la représentation image au profil.

Correction du flou à partir du profil de rehaussement

De préférence, selon l'invention, les moyens de traitement informatique pour corriger chaque zone d'images à corriger en fonction du profil de rehaussement comprennent des moyens de calcul pour :

- représenter au moins en partie la zone d'image à corriger dans la basé,
- appliquer l'opérateur paramétré à la représentation de la zone d'image à corriger , de manière à obtenir une représentation corrigée de la zone d'image à corriger,
- substituer la représentation de la zone d'image à corriger par la représentation corrigée de la zone d'image à corriger de manière à obtenir une zone d'image transformée.

Clippage dans le cas du flou

De préférence, selon l'invention, le système comprend en outre des moyens de calcul pour calculer une image ayant un niveau de bruit contrôlé, à partir de l'image transformée, en mettant en oeuvre une fonction ayant pour objet de modifier la luminance de l'image numérique et ayant au moins pour arguments:

- la luminance d'un point de l'image numérique transformée,
- les luminances d'une zone autour du point correspondant de l'image numérique,
- des données caractéristiques du bruit.

Caractéristiques variables influant sur le bruit et/ou sur le flou

De préférence, selon l'invention, les informations formatées dépendent de valeurs de caractéristiques variables selon l'image numérique, notamment la taille de l'image numérique. Le système comprend en outre des moyens de calcul pour déterminer la ou les valeur(s) des caractéristiques variables, pour l'image numérique.

Réduction de la dynamique dans le cas d'un appareil de restitution

De préférence, selon l'invention, le système est plus particulièrement destiné à calculer une image transformée à partir d'une image numérique et d'informations formatées relatives à des défauts d'une chaîne d'appareil comprenant au moins un appareil de restitution d'image. L'appareil de restitution a une dynamique. L'image transformée a une dynamique. Le système comprend en outre des moyens de traitement informatique pour adapter la dynamique de l'image transformée à la dynamique de l'appareil de restitution.

Description détaillée

D'autres caractéristiques et avantages de l'invention apparaîtront à la lecture de la description des variantes de réalisation de l'invention données à titre d'exemple indicatif et non limitatif, et de :

la figure 1 qui représente une image transformée calculée à partir d'une image numérique et d'une image intermédiaire,
la figure 2 qui représente des défauts de l'image numérique,
la figure 3 qui représente une sélection sur l'image numérique de zones d'analyse,
la figure 4a qui représente une variation locale de luminance sur une zone d'analyse,

la figure 4b qui représente un histogramme des occurrences de variation locales de luminance,

la figure 4c qui représente une partie de l'histogramme située avant le premier maximum local de l'histogramme

la figure 5 qui représente des classes de zones d'analyse selon leur luminance moyenne,

la figure 6 qui représente la modification de la luminance de l'image numérique,

la figure 7a qui représente la correction d'une zone image transformée en fonction d'un profil de rehaussement,

la figure 7b qui représente un exemple de création d'une image déflouée à niveau de bruit contrôlé.

les figures 8a et 8b qui représentent la construction d'un profil de rehaussement à partir du bruit,

les figures 9a, 9b, 9c et 9d qui présentent l'adaptation de la dynamique de l'image transformée à la dynamique d'un appareil de restitution

figure 10 : des informations formatées IF liées aux défauts P5 d'un appareil P25 d'une chaîne d'appareils P3.

Appareil

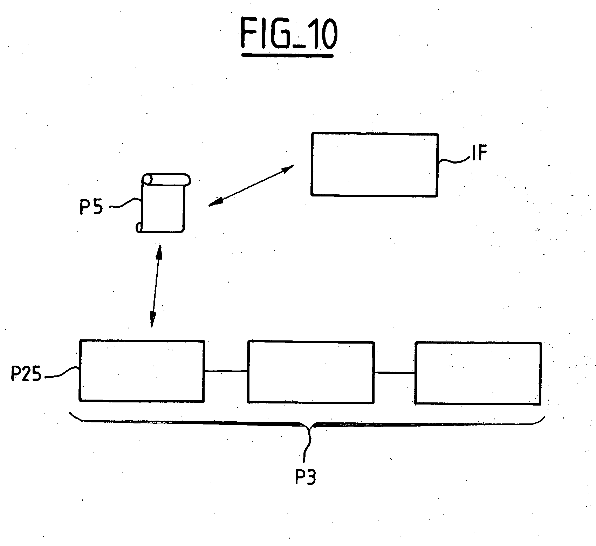

En se référant notamment à la figure 10, on va décrire la notion d'appareil P25. Au sens de l'invention, un appareil P25 peut être notamment:

- un appareil de capture d'image, comme par exemple un appareil photo jetable, un appareil photo numérique, un appareil reflex, un scanner, un fax, un endoscope, un caméscope, une caméra de surveillance, une webcam, une caméra intégrée ou reliée à un téléphone, à un assistant personnel ou à un ordinateur, une caméra thermique, un appareil d'échographie,
- un appareil de restitution d'image comme par exemple un écran, un projecteur, un téléviseur, des lunettes de réalité virtuelle ou une imprimante,
- un être humain ayant des défauts de vision, par exemple l'astigmatisme,
- un appareil auquel on veut ressembler, pour produire des images ayant par exemple un aspect similaire à celles produites par un appareil de marque Leica,
- un dispositif de traitement d'images, par exemple un logiciel de zoom qui a comme effet de bord d'ajouter du flou,
- un appareil virtuel équivalent à plusieurs appareil P25,

Un appareil P25 plus complexe comme un scanner/fax/imprimante, un Minilab d'impression photo, un appareil de vidéo-conférence peut être considéré comme un appareil P25 ou plusieurs appareils P25.

Chaîne d'appareils

En se référant notamment à la figure 10, on va maintenant décrire la notion de chaîne d'appareils P3. On appelle chaîne d'appareils P3 un ensemble d'appareils P25. La notion de chaîne d'appareils P3 peut en outre inclure une notion d'ordre.

Les exemples suivants constituent des chaînes d'appareils P3:

- un seul appareil P25,
- un appareil de capture d'image et un appareil de restitution d'image,
- un appareil photo, un scanner, une imprimante par exemple dans un Minilab de tirage photo,
- un appareil photo numérique, une imprimante par exemple dans un Minilab de tirage photo,
- un scanner, un écran ou une imprimante, par exemple dans un ordinateur,
- un écran ou projecteur et l'oeil d'un être humain,
- un appareil et un autre appareil auquel on veut ressembler,
- un appareil photo et un scanner,
- un appareil de capture d'image, un logiciel de traitement d'images,
- un logiciel de traitement d'images, un appareil de restitution d'image,
- une combinaison des exemples précédents,
- un autre ensemble d'appareils P25.

Défaut

En se référant notamment à la figure 10, on va maintenant décrire la notion de défaut P5. On appelle défaut P5 de l'appareil P25, un défaut lié aux caractéristiques de l'optique et/ou du capteur et/ou de l'électronique et/ou du logiciel intégré à un appareil P25 ; des exemples de défauts P5 sont par exemple la distorsion, le flou, le vignetage, les aberrations chromatiques, le rendu des couleurs, l'uniformité du flash, le bruit du capteur, le grain, l'astigmatisme, l'aberration sphérique.

Image numérique

En se référant notamment à la figure 10, on va maintenant décrire la notion d'image numérique INUM. On appelle image numérique INUM une image capturée ou modifiée ou restituée par un appareil P25. L'image numérique INUM peut provenir d'un appareil P25 de la chaîne d'appareils P3. L'image numérique INUM peut être destinée à un appareil P25 de la chaîne d'appareils P3. De manière plus générale l'image numérique INUM peut provenir et/ou être destinée à la chaîne d'appareils P3. Dans le cas d'images animées, par exemple vidéo, constituées d'une séquence dans le temps d'images fixes, on appelle image numérique INUM : une image fixe dé la séquence d'images.

Informations formatées

En se référant notamment à la figure 10, on va maintenant décrire la notion d'informations formatées IF. On appelle informations formatées IF des données liées aux défauts P5 d'un ou plusieurs appareils P25 de la chaîne d'appareils P3 et permettant de calculer une image transformée I-Transf en tenant compte des défauts P5 de l'appareil P25. Pour produire les informations formatées IF, on peut utiliser divers procédés basés sur des mesures, et/ou des captures ou restitution de références, et/ou des simulations.

Pour produire les informations formatées IF, on peut par exemple utiliser le procédé décrit dans la demande de brevet international déposée le même jour que la présente demande au nom de la société Vision IQ et sous le titre : "Procédé et système pour produire des informations formatées liées aux défauts d'au moins un appareil d'une chaîne, notamment au flou." Dans cette demande, il est décrit un procédé pour produire des informations formatées liées aux appareils d'une chaîne d'appareils. La chaîne d'appareils comprend notamment au moins un appareil de capture d'image et/ou au moins un appareil de restitution d'image. Le procédé comprend l'étape de produire des informations formatées liées aux défauts d'au moins un appareil de la chaîne. De préférence, l'appareil permettant de capturer ou restituer une image (I). L'appareil comporte au moins une caractéristique fixe et/ou une caractéristique variable selon l'image (I). Les caractéristiques fixe et/ou variables sont susceptibles d'être associées à une ou plusieurs valeurs de caractéristiques, notamment la focale et/ou la mise au point et leurs valeurs de caractéristiques associées. Le procédé comprend l'étape de produire des informations formatées mesurées liées aux défauts de l'appareil à partir d'un champ mesuré D(H). Les informations formatées peuvent comprendre les informations formatées mesurées.

Pour produire les informations formatées IF, on peut par exemple utiliser le procédé décrit dans la demande de brevet international déposée le même jour que la présente demande au nom de la société Vision IQ et sous le titre : "Procédé et système pour fournir, selon un format standard, des informations formatées à des moyens de traitement d'images." Dans cette demande, il est décrit un procédé pour fournir, selon un format standard, des informations formatées IF à des moyens de traitement d'images, notamment des logiciels et/ou des composants. Les informations formatées IF sont liées aux défauts d'une chaîne d'appareils P3. La chaîne d'appareils P3 comprend notamment au moins un appareil de capture d'image et/ou un appareil de restitution d'image. Les moyens de traitement d'images utilisent les informations formatées IF pour modifier la qualité d'au moins une image provenant ou destinée à la chaîne d'appareils P3. Les informations formatées IF comportent des données caractérisant des défauts P5 de l'appareil de capture d'image, notamment les caractéristiques de distorsion, et/ou des données caractérisant des défauts de l'appareil de restitution des images, notamment les caractéristiques de distorsion.

Le procédé comprend l'étape de renseigner au moins un champ du format standard avec les informations formatées IF. Le champ est désigné par un nom de champ. Le champ contient au moins une valeur de champ.

Pour rechercher les informations formatées IF, on peut par exemple utiliser le procédé décrit dans la demande de brevet international déposée le même jour que la présente demande au nom de la société Vision IQ et sous le titre : "Procédé et système pour modifier la qualité d'au moins une image provenant ou destinée à une chaîne d'appareils." Dans cette demande, il est décrit un procédé pour modifier la qualité d'au moins une image provenant ou destinée à une chaîne d'appareils déterminée. La chaîne d'appareils déterminée comprend au moins un appareil de capture d'image et/ou au moins un appareil de restitution d'image. Les appareils de capture d'image et/ou les appareils de restitution d'image, progressivement mis sur le marché par des acteurs économiques distincts, appartiennent à un ensemble indéterminé d'appareils. Les appareils de l'ensemble d'appareils présentent des défauts qui peuvent être caractérisés par des informations formatées. Le procédé comprend, pour l'image concernée, les étapes suivantes :

- l'étape de répertorier des sources d'informations formatées relatives aux appareils de l'ensemble d'appareils,
- l'étape de rechercher de manière automatique, parmi les informations formatées ainsi répertoriées, des informations formatées spécifiques relatives à la chaîne d'appareils déterminée,
- l'étape de modifier de manière automatique l'image au moyen de logiciels de traitement d'images et/ou de composants de traitement d'images en tenant compte des informations formatées spécifiques ainsi obtenues.

Pour produire les informations formatées IF, on peut par exemple utiliser le procédé décrit dans la demande de brevet international déposée le même jour que la présente demande au nom de la société Vision IQ et sous le titre : "Procédé et système pour réduire la fréquence des mises à jour de moyens de traitement d'images." Dans cette demande, il est décrit un procédé pour réduire la fréquence des mises à jour de moyens de traitement d'images, notamment un logiciel et/ou un composant. Les moyens de traitement d'images permettant de modifier la qualité des images numériques provenant ou destinées à une chaîne d'appareils. La chaîne d'appareil comporte au moins un appareil de capture d'image et/ou au moins un appareil de restitution d'image. Les moyens de traitement d'image mettent en oeuvre des informations formatées liées aux défauts d'au moins un appareil de la chaîne d'appareils. Les informations formatées dépendent d'au moins une variable. Les informations formatées permettant d'établir une correspondance entre une partie des variables et des identifiants. Les identifiants permettent de déterminer la valeur de la variable correspondante à l'identifiant en tenant compté de l'identifiant et de l'image. Il résulte de la combinaison des traits techniques qu'il est possible de déterminer la valeur d'une variable, notamment dans le cas où la signification physique et/ou le contenu de la variable ne sont connus que postérieurement à la diffusion des moyens de traitement d'image. Il résulte également de la combinaison des traits techniques que le temps entre deux mises à jour du logiciel de correction peut être espacé. Il résulte également de la combinaison des traits techniques que les divers acteurs économiques qui produisent des appareils et/ou des moyens de traitement d'image peuvent mettre à jour leurs produits indépendamment des autres acteurs économiques, même si ces derniers changent radicalement les caractéristiques de leurs produit ou ne peuvent forcer leur client à mettre à jour leur produits. Il résulte également de la combinaison des traits techniques qu'une nouvelle fonctionnalité peut être déployée progressivement en commençant par un nombre limité d'acteurs économiques et d'utilisateurs pionniers.

Caractéristique variable

On va maintenant décrire la notion de caractéristique variable CC. Selon l'invention, on appelle caractéristique variable CC un facteur mesurable et variable d'une image numérique INUM à l'autre capturée, modifiée ou restituée par un même appareil P25, et ayant une influence sur le défaut P5 de l'image capturée, modifiée ou restituée par l'appareil P25, notamment :

- une variable globale, fixe pour une image numérique INUM donnée, par exemple une caractéristique de l'appareil P25 au moment de la capture ou de restitution de l'image liée à un réglage de l'utilisateur ou liée à un automatisme de l'appareil P25,
- une variable locale, variable dans une image numérique INUM donnée, par exemple des coordonnées x, y ou ro, theta dans l'image, permettant d'appliquer le cas échéant un traitement local différent selon la zone de l'image numérique RHUM.

N'est en général pas considéré comme une caractéristique variable CC: un facteur mesurable et variable d'un appareil P25 à l'autre mais fixe d'une image numérique INUM à l'autre capturée, modifiée ou restituée par un même appareil P25, par exemple la focale pour un appareil P25 à focale fixe.
Les informations formatées IF peuvent dépendre d'au moins une caractéristique variable CC.
Par caractéristique variable CC, on peut entendre notamment :

- la focale de l'optique,
- le redimensionnement appliqué à l'image (facteur de zoom numérique : grossissement d'une partie de l'image ; et/ou le sous-échantillonnage : diminution du nombre de pixels de l'image),
- la correction non linéaire de luminance, par exemple la correction de gamma,
- le rehaussement de contour, par exemple le niveau de déflouage appliqué par l'appareil P25,
- le bruit du capteur et de l'électronique,
- l'ouverture de l'optique,
- la distance de mise au point,
- le numéro de la vue sur un film,
- la sur ou sous exposition,
- la sensibilité du film ou du capteur,
- le type de papier utilisé dans une imprimante,
- la position du centre du capteur dans l'image,
- la rotation de l'image par rapport au capteur,
- la position d'un projecteur par rapport à l'écran,
- la balance des blancs utilisée,
- l'activation du flash et/ou sa puissance,
- le temps de pose,

- le gain du capteur,
- la compression,
- le contraste,
- un autre réglage appliqué par l'utilisateur de l'appareil P25, par exemple un mode de fonctionnement,
- un autre réglage automatique de l'appareil P25,
- une autre mesure réalisée par l'appareil P25.

Valeur de caractéristique variable

On va maintenant décrire la notion de valeur de caractéristique variable VCC. On appelle valeur de caractéristique variable VCC la valeur de la caractéristique variable CC au moment de la capture, modification ou restitution d'une image déterminée.

Calcul de l'image transformée

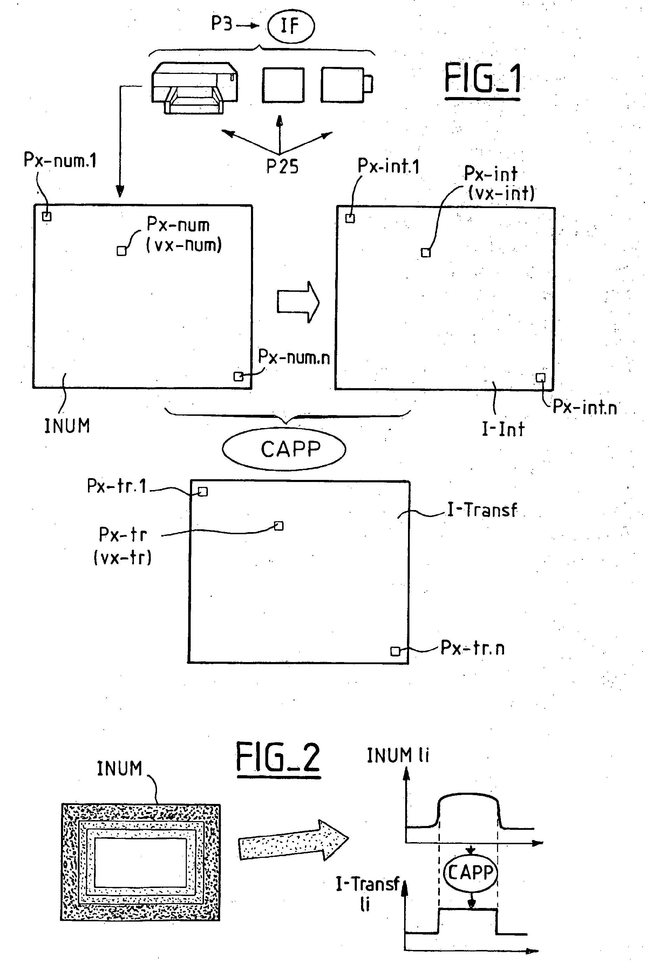

Une image numérique INUM comporte un ensemble d'éléments images appelés pixels Px-num.1 à Px-num.n régulièrement réparties à la surface de l'image RHUM. Sur la figure 1, ces pixels ont la forme de carrés mais ils pourraient avoir une toute autre forme, circulaire ou hexagonale par exemple ; cela dépend de la conception des surfaces destinées à porter l'image dans les appareils de capture et de restitution d'image. De plus, sur la figure 1, les pixels ont été représentés de façon jointive mais en réalité, généralement il existe un espacement entre les pixels. La luminance associée en un point quelconque Px-num est vx-num.

L'image intermédiaire I-Int comporte un ensemble de pixels, similaire à celui de l'image INUM mais pas nécessairement, appelés pixels intermédiaires Px-int.1 à Px-int. n chaque pixel intermédiaire est caractérisé par une position intermédiaire Px-int et une valeur intermédiaire vx-int.

L'image transformée I-Trarisf comporte également un ensemble de pixels appelés pixels transformés Px-tr.1 à Px-tr.n chaque pixel transformé est caractérisé par une position transformée Px-tr et une valeur transformée vx-tr.

Une image transformée est une image corrigée ou modifiée qui est obtenue par application d'une transformation à une image RHUM. Cette transformation, qui peut être une transformation photométrique, est réalisée en intégrant dans le calcul

- l'image INUM,
- Des données de bruit DcB caractéristiques à INUM,
- l'image I-Int,
- des informations formatées qui tiennent compte, par exemple, des défauts des appareils utilisés et/ou de caractéristiques que l'on veut introduire dans l'image.

On notera que les informations formatées peuvent être relatives à un nombre limité de pixels transformés et/ou intégrer des valeurs de caractéristiques variables selon l'image (par exemple la focale, la mise au point, l'ouverture ...), dans ce cas il peut y avoir une étape supplémentaire réalisée par exemple par interpolation de manière à se ramener à des informations formatées simples telles celles d'un appareil ne présentant aucune caractéristiques variables, de sorte que le cas des appareils notamment à focale variable se ramène au cas d'un appareil à focale fixe.

On notera que les informations formatées peuvent être relatives à un nombre limité de pixels transformés et/ou de valeurs de caractéristiques variables selon l'image, dans ce cas il peut y avoir une étape supplémentaire réalisée par exemple par interpolation. Dans l'exemple d'une fonction x',y' = f (x, y, t) où t est une caractéristique variable (focale par exemple), les informations formatées peuvent être constituées d'un nombre limité de valeurs $(x_i, y_i, t_i, f(x_i, y_i, t_i))$. Il faut alors calculer une approximation pour les autres valeurs de x, y, t autre que les points de mesures. Cette approximation peut se faire en recourant à des techniques d'interpolations simples ou en passant par des modèles paramétrables (polynômes, splines, fonctions de Bezier) d'ordre plus ou moins élevés selon la précision finale souhaitée. Avec un formalisme analogue t pourrait être un vecteur et inclure simultanément plusieurs caractéristiques variables (focale, mise au point, zoom ..).

Dans le cas du bruit et/ou du flou, les informations formatées pourraient être constituées éventuellement de vecteurs permettant de caractériser le bruit et/ou le flou relatif à un appareil et/ou une chaîne d'appareils, et ce pour l'ensemble des combinaisons des paramètres variables du dispositif, notamment en recourant à des profils caractéristiques du défaut dans des bases de représentation particulières notamment les représentations fréquentielles telles que par exemple les transformées de Fourier, les transformées en ondelettes .... En effet l'homme de l'art sait que les représentions fréquentielles sont des domaines compacts et appropriés de représentation de phénomènes physique liés au bruit et/ou au flou.

Il est en outre possible de combiner les informations formatées IF relatives à plusieurs appareils P25 d'une chaîne d'appareils P3, pour obtenir des informations formatées relatives à un appareil virtuel présentant les défauts desdits plusieurs appareils P25 ; de sorte qu'il est possible de calculer en une étape l'image transformée I-Transf à partir de l'image INUM pour l'ensemble desdits plusieurs appareils P25 ; de sorte que ledit calcul est plus rapide que si l'on applique le procédé selon l'invention successivement sur chaque appareil P25 ; ladite combinaison, dans l'exemple d'une représentation fréquentielle telle que par exemple la transformée de Fourier, peut être réalisée en cumulant les profils caractéristiques du défaut de chaque appareil, par exemple par multiplication.

Les informations formatées pourront comprendre des données étudiées dans une phase préalable et relatives aux appareils utilisés, mais également toutes informations du style format Exif ou autre qui renseigneraient sur les réglages de l'appareil au moment de la prise de vue (focale, mise au point, ouverture, vitesse, flash..).

Admettons que l'image numérique INUM représente par exemple la capture de l'image monochromatique d'un carré blanc sur fond noir. Sur la figure 2, nous avons représenté les luminances d'une ligne de l'image INUM. Du fait du bruit et/ou du flou engendré par la chaîne de capture et/ou de restitution, le profil idéal (une marche d'escalier) est déformé. Le procédé de l'invention permet, à l'aide de moyens de calcul CAPP incorporant des approximations selon entre autre une précision finale souhaitée, d'obtenir sur l'image transformée I-Transf, un carré dont la valeur de luminance vx-tr en chacun des points px-tr est bien corrigée aux approximations près.

Notons que l'application de l'algorithme CAPP peut dans le cas du bruit et/ou du flou ramener l'image originale INUM vers une image parfaite ou quasi parfaite. Le même algorithme peut également ramener l'image INUM vers une autre image éventuellement déformée, mais différemment, de manière à produire une image à la ressemblance proche d'un type de bruit et/ou flou d'image connu (effet bruit rétro ...) . Le même procédé permet également de ramener l'image INUM vers une image non parfaite (au sens d'un carré blanc sur fond noir comme sur la figure 2) mais optimale aux yeux de l'observateur de sorte de qu'il est possible de compenser éventuellement des défauts de perception de l'oeil humain.

Estimation du bruit

Pour certains types d'appareils APP, notamment de capture d'images, il est possible de déduire des données caractéristiques du bruit DcB à partir des informations formatées. Par exemple ceci est notamment le cas pour les appareils permettant de renseigner des caractéristiques variables influentes sur le bruit comme le gain, l'ISO.... La dépendance entre le bruit et ces caractéristiques sera renseignée dans les informations formatées notamment au moyen de fonctions polynomiales.

Dans la mesure où des informations formatées ne permettent pas déduire directement ou indirectement des données caractéristiques du bruit, il sera nécessaire de déduire ces données caractéristiques. Nous allons donc décrire, au sens de la présente invention, un exemple de réalisation permettant de produire des données caractéristiques du bruit DcB et relatives à une image INUM.

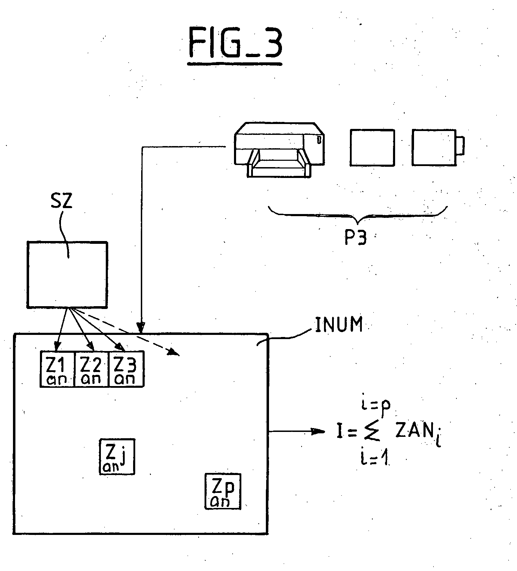

L'image INUM est subdivisée en une série de zones d'analyses (ZAN) non nécessairement jointives et pouvant le cas échant se recouper. La figure 3 représente un exemple de découpage. Une zone d'analyse ZAN peut être de forme quelconque et il n'est forcément nécessaire d'analyser l'ensemble des points inscrits dans ladite zone d'analyse ZAN .Pour chaque zone d'analyse ZAN , par exemple une fenêtre carrée de taille (3X3 pixels, 5X5 pixels), le procédé réalise une mesure de variation locale de luminance (VLL). L'ensemble de mesures de variations locales de luminances pour toutes les zones d'analyse ZAN est alors analysé de façon statistique pour produire une ou des données caractéristiques du bruit DcB et relative à l'image RHUM.

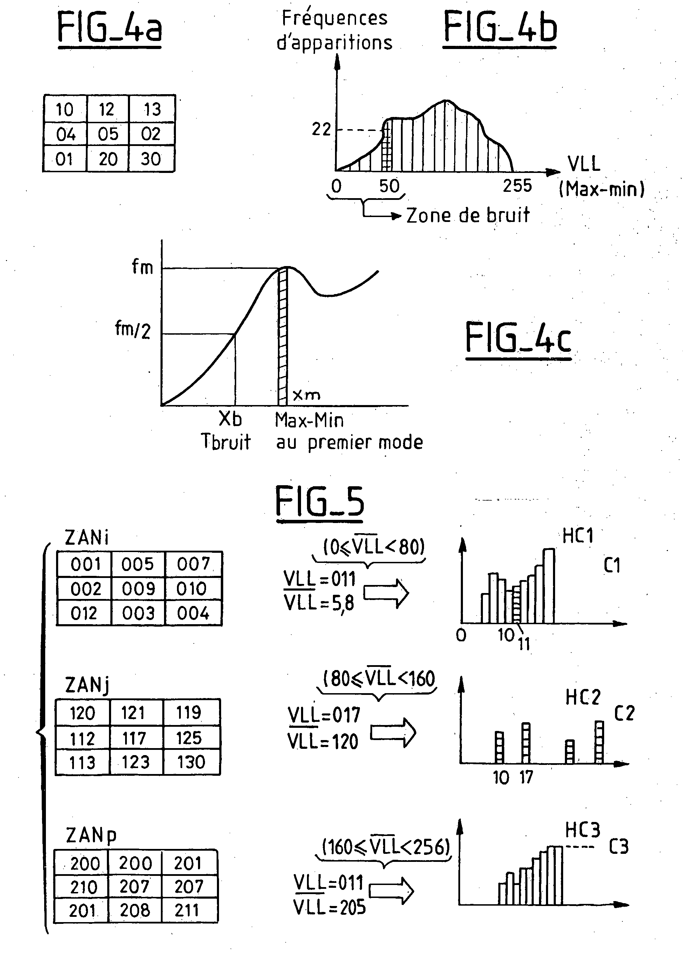

Un exemple de mesure de variation locale de luminance VLL peut se réaliser en calculant sur une zone d'analyse ZAN, l'écart maximal de luminance entre l'ensemble des points. Sur la figure 4a, VLL vaut 29, ce qui représente l'écart maximal entre deux pixels de la zone. Une autre façon pourrait être de calculer l'écart-type de la distribution relative à la variation de luminance.

L'ensemble de mesures de variation locale de luminance VLL peut être analysée de façon statistique en créant un histogramme des fréquences d'apparition des variations. Cet histogramme dont un exemple est représenté en figure 4b porte en abscisse une quantification des écarts de luminance VLL selon la précision de mesure sur le bruit. En ordonnée on totalise le nombre d'apparition d'une zone d'analyse ZAN donnant la valeur VLL. Sur l'exemple il y a eu 22 zones d'analyse ZAN pour lesquelles la mesure de variation locale de luminance a donné la valeur 50.

Le profil de cet histogramme pour une image naturelle, par exemple une image de paysage comportant une distribution aléatoire de motifs de luminance différente, mais de luminance homogène sur des petites zones d'analyse, comporte une zone caractéristique située avant le premier maximum local (figure 4b,4c). Si l'on admet qu'une image naturelle comporte un nombre important de zones de taille réduite (taille d'une zone d'analyse ZAN) pour lesquelles l'éclairage est quasi uniforme, alors le premier maximum local de l'histogramme (d'abscisse xm et d'ordonnée fm) caractérise le bruit moyen de l'image INUM. Pour l'image très peu bruitée nous aurons beaucoup de mesures VLL présentant des écarts de luminance faibles et l'abscisse du premier mode se rapprochera de l'origine ; en revanche si l'image incorpore beaucoup de bruit issu des différents appareils de la chaîne, chaque mesure VLL réalisée sur des zones théoriquement homogènes génèrera des valeurs élevées et éloignera de l'origine l'abscisse du premier mode de l'histogramme.

Les données caractéristiques du bruit de l'image INUM peuvent être constituées de l'ensemble des valeurs de l'histogramme jusqu'au premier mode. Une autre façon d'extraire une information plus synthétique de la caractéristique du bruit consiste, comme cela est représenté sur la figure 4c, d'affecter une valeur de bruit moyen BM comme étant l'abscisse xb, comprise entre l'origine et le premier mode de l'histogramme (xm), pour laquelle l'ordonnée est une fraction de fm (typiquement sa moitié).

La figure 5 représente une variante de calcul des données caractéristiques du bruit DcB. Selon une procédure analogue d'analyse des zones d'analyse ZAN, l'invention prévoit d'estimer simultanément à la variation locale de luminance VLL une information relative à la luminance moyenne dans ladite zone d'analyse ZAN (par exemple la moyenne algébrique des luminances sur la zone). Le procédé prévoit également, en fonction de la quantification des images de luminance, de créer des classes qui subdivisent de façon linéaire ou non l'échelle de la luminance. Pour une quantification sur 8 bits le maximum de classe est de 255 ; typiquement nous utiliserons entre 5 et 10 classes (C1 .. Cn) de découpage de la luminance. Dans un exemple de réalisation du procédé, le choix du découpage pourra être fonction de l'histogramme des luminances de l'image INUM. A chaque classe correspondra un histogramme de cumul de fréquence d'apparition d'une VLL, de telle manière que le bruit contenu dans l'image INUM est analysé par tranche de luminance.

Sur la figure 5 nous avons décrit trois exemples de zones d'analyse ZAN, pour une analyse des caractéristiques de bruit en trois classes. Pour la zone ZAN-i la luminance moyenne est de 5,8, cette zone appartient donc à la classe C1 et la mesure de VLL (qui vaut 11) sera donc accumulée dans l'histogramme HC1 relatif à C1. Une démarche analogue est faite pour les zones d'analyse ZAN-j et ZAN-p qui, compte tenu de leur mesure de luminance moyenne appartiennent respectivement aux classes C2 et C3. Lorsque l'ensemble des zones d'analyse ZAN constituant l'image INUM est analysé, nous obtenons autant d'histogrammes que de classes. De façon analogue à la description précédente il est possible de sortir une valeur caractéristique de bruit par histogramme et donc par classe et ainsi de constituer un ensemble de données DcB=[(C1,BM1), (C2, BM2) , ... (Cn, BMn)] caractéristiques du bruit de INUM.

Clippage

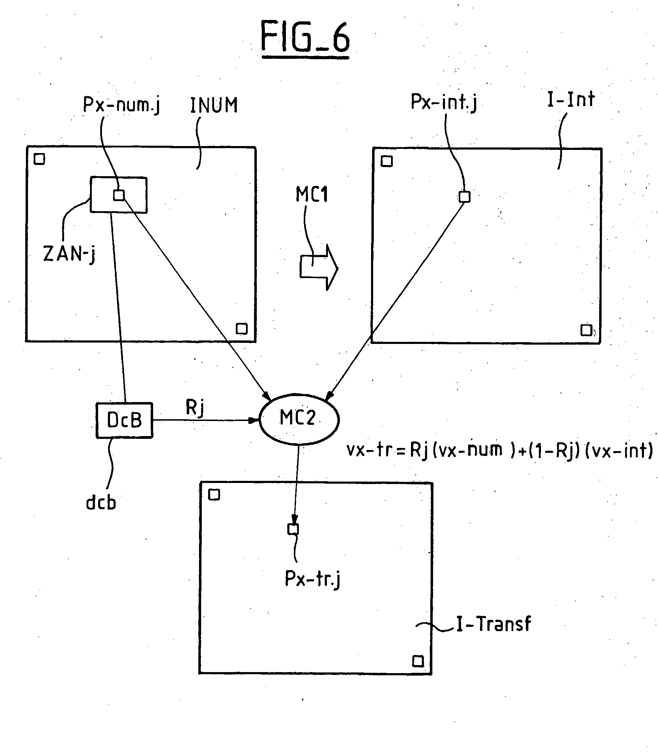

Soit une image numérique INUM au sens de la présente invention, soit également une transformation applicable à INUM de telle sorte à réaliser une image intermédiaire qui selon certains aspects présente l'avantage d'apporter des modifications souhaitées mais en revanche présente l'inconvénient, dans certaines zones, d'augmenter le bruit de l'image. Cette transformation, comme nous le verrons par la suite, pourra être par exemple une transformation réduisant le flou, une transformation augmentant le contraste, une transformation permettant la création de mosaïques d'images, ou toute autre transformation susceptible de modifier les caractéristiques de bruit entre l'image INUM et I-Int. Le procédé représenté en figure 6, est appelé clippage dans le sens où, dans le cadre de l'invention, il consiste à prendre des portions d'images. Le calcul de la luminance vx-tr d'un pixel transformé Px-tr-j requiert des informations relatives :

- au pixel Px-num-j et une zone d'analyse ZAN-j autour du point
- au pixel Px-int-j
- aux données caractéristiques du bruit DcB

L'analyse de la luminance moyenne et de la variation locale de luminance VLL dans la zone ZAN-j permettent de déterminer la classe Cj d'appartenance de bruit, et d'extraire des données DcB le bruit BM-j. Selon une façon, on peut calculer un rapport Rj normalisé entre BM-j et VLL. Comme cela est représenté sur la figure 6 si Rj tend vers 1 (cas où la variation locale de luminance VLL est sensiblement du même ordre que BM-j c'est à dire que l'on mesure du bruit, alors la luminance vx-tr du pixel transformé Px-tr-j est prise majoritairement dans INUM. La valeur de luminance d'un pixel transformé peut alors s'exprimer comme une fonction de la luminance du pixel vx-num, de la luminance du pixel vx-int et des données caractéristiques du bruit. Un cas particulier peut être la règle suivante :

$$vx\text{-}tr = (Rj)\ vx\text{-}num + (1\text{-}Rj)\ vx\text{-}int$$

où vx-num et vx-int représentent les luminances respectives de Px-num-j et Px-int-j. Dans le cas contraire, (la variation locale de luminance VLL est forte devant BM-j c'est à dire on est dans du signal) le rapport Rj tend vers 0 et la luminance vx-tr du pixel transformé Px-tr-j est prise majoritairement dans l'image intermédiaire I-Int.

De façon plus générale la valeur de luminance d'un pixel transformé peut s'exprimer comme une fonction des luminances du pixel vx-num et de ses voisins, des luminances du pixel vx-int et de ses voisins et enfin des données caractéristiques du bruit.

Il sera ainsi possible par exemple de déduire l'image transformée à partir de l'image intermédiaire en effectuant une opération de filtrage plus ou moins fort dans cette dernière à partir du bruit mesuré dans INUM.

Ce procédé présente l'avantage de ne prendre dans l'image intermédiaire que l'information pertinente à l'exclusion des points pour lesquels le bruit analysé dans l'image originale INUM est trop important au sens d'une étude globale statistique de bruit caractérisée par les données DcB.

Il est entendu qu'il est possible au cours de l'opération de clippage d'appliquer entre les images INUM et I-Int toute relation de passage notamment des transformations linéaires ou non-linéaires.

Le système selon l'invention comporte en figure 3, un dispositif de sélection de zones d'analyse SZ. En figure 6 il comporte un dispositif de calcul MC1 pour calculer un pixel intermédiaire à partir d'un pixel Pi de l'image INUM. Par ailleurs, un dispositif de calcul dcb permet de calculer les données caractéristiques du bruit DcB et de fournir un coefficient Rj. Le dispositif de calcul MC2 permet de calculer la valeur d'un pixel transformé, c'est à dire sa luminance, à partir des valeurs des pixels numérique et intermédiaire correspondants et du coefficient Rj.

Correction du flou

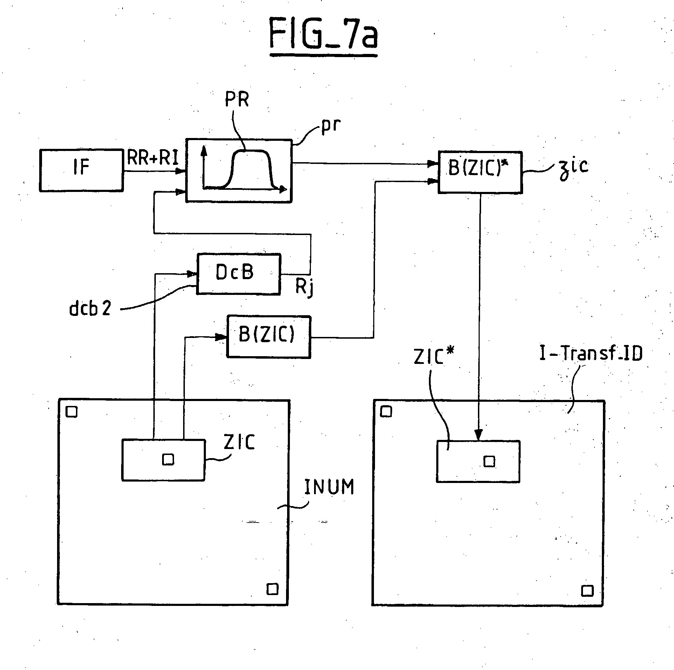

Nous allons à présent décrire un exemple de réalisation d'un procédé plus particulièrement destiné à calculer une image transformée corrigée de tout ou partie du flou. La description de ce procédé est basée sur l'exemple de réalisation du système de la figure 7a. L'image numérique INUM est subdivisée en zone d'image à corriger ZIC. L'ensemble de ces zones couvre la totalité de l'image INUM et le cas échéant, ces zones peuvent éventuellement se chevaucher pour diminuer certains effets perturbateurs plus connus par l'homme de l'art' sous le vocable d'effet de bord. La création d'une zone image transformée ZIC* et corrigée du défaut de flou met en oeuvre un processus qui requiert comme argument, de façon non limitative, les paramètres suivants :

- la connaissance des valeurs des paramètres variables de l'appareil ou de la chaîne d'appareils de capture et/ou de restitution d'images au moment de la prise de vue.
- la luminance en chaque point Px-num appartenant à la zone ZIC,
- les données caractéristiques du bruit DcB de INUM
- les informations formatées relatives à une modélisation du flou de l'appareil et/ou de la chaîne d'appareils, et préalablement modélisées éventuellement au moyen d'un modèle paramétrable.

Pour une configuration d'arguments donnés (focale, mise au point, zoom, ouverture, ..., DcB, zone ZIC), le modèle paramétrable des informations formatées permet d'accéder à des profils caractéristiques du flou relatifs à une représentation image RI et une représentation de référence RR. Ces profils sont exprimés dans une base particulière notamment une base fréquentielle B en utilisant par exemple une transformée de Fourier, une transformée en ondelettes ...

La base B sera implicite ou bien alors renseignée dans les informations formatées. Au sens de la présente invention l'homme de l'art conçoit qu'il est possible de représenter une image numérique (par exemple INUM) dans un espace vectoriel de dimension égal au nombre de pixels. On entend par base B, et ce de façon non exclusive, une base au sens mathématique du terme de cet espace vectoriel et/ou un sous espace vectoriel de celui-ci.

Par la suite, on appelle fréquence, un identifiant relatif à chaque élément de la base. L'homme de l'art comprend les transformations de Fourier et/ou transformées en ondelettes comme des changements de base de l'espace des images. Dans le cas d'un appareil APP pour lequel les défauts de flou n'affectent de façon significative qu'un sous espace de l'espace vectoriel des images il sera nécessaire de ne corriger que les composantes de l'image INUM appartenant à ce sous espace. Ainsi la base B sera de préférence choisie comme une base de représentation de ce sous espace.

Une autre façon de mettre en oeuvre le procédé au sens de l'invention est de choisir une base de représentation de l'image optimale au sens par exemple de celui du temps de calcul. Cette base pourra être choisie de dimension petite, chaque élément de la base ayant un support de quelques pixels localisés spatialement dans l'image INUM (par exemple les Splines ou les ensemble d'opérateurs de variations locales Laplacien, Laplacien de Laplacien ou dérivées d'ordre supérieure...)

La mesure de la variation locale de luminance VLL sur la zone ZIC permet grâce aux données caractéristiques du bruit DcB de INUM de calculer un coefficient Rj (dispositif dcb2). Ce coefficient sera couplé aux représentations RI et RR (dispositif pr) pour générer un profil fréquentiel de rehaussement PR relatif à la zone ZIC. Ce profil indique le gain à apporter à chaque fréquence relative à l'information de luminance contenu dans la zone à corriger ZIC, pour supprimer tout ou partie du flou.

La figure 7a montre qu'il suffit alors d'exprimer la zone ZIC dans une base B, notamment une base fréquentielle adéquate B(ZIC), d'appliquer la fonction de rehaussement pour tout ou partie des fréquences B(ZIC*) = B(ZIC)*PR, puis par une transformée inverse de retrouver la zone image transformée. L'ensemble des zones images transformées est alors combiné de manière à obtenir l'image transformée (I-Transf ID) déflouée. Cette combinaison permet par exemple d'apporter des solutions en cas de chevauchement de ZIC notamment pour limiter les effets de bord;

La création de l'image (I-Transf ID) telle que précédemment décrite, présente l'avantage d'apporter les modifications nécessaires à l'image INUM vis à vis du flou, mais présente l'inconvénient d'augmenter le bruit dans certaines zones (notamment les zones relativement uniformes).

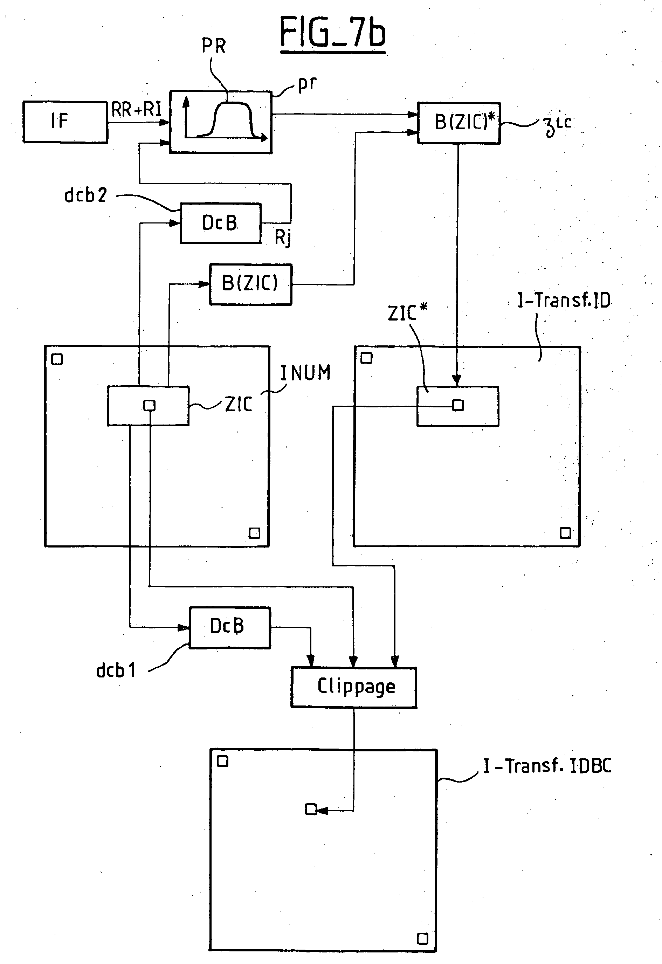

Une seconde mise en oeuvre d'un procédé de la présente invention est basée sur l'exemple de réalisation du système de la figure 7b. Elle permet de réaliser une image déflouée (I-Transf IDBC) ayant un niveau de bruit contrôlé. La création de l'image transformée (I-Transf IDBC) met en oeuvre une procédure de clippage similaire à celle décrite précédemment en figure 6, à l'aide du dispositif dcb1 et du dispositif de clippage. Dans ce cas présent l'image intermédiaire, telle que définie dans la figure 6, n'est autre que l'image déflouée (I-Transf ID).

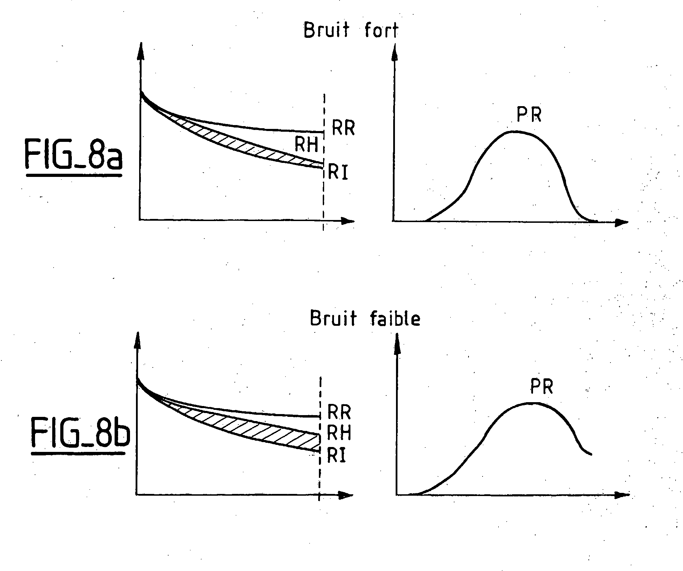

La figure 8 décrit plus précisément l'obtention du profil de rehaussement PR pour une zone ZIC déterminée. Les représentations image RI et de référence RR extraites des informations formatées et relatives à une zone image à corriger ZIC sont caractéristiques du flou introduit par le système d'acquisition et/ou de restitution pour une configuration de paramètres variables donnée au moment de la prise de vue (focale 10mm, mise au point infinie, ouverture f/2 ...). Ces représentations RR et RI expriment les notions suivantes

- RI est le profil fréquentiel d'une zone ZIC d'une scène de référence tel qu'il a été généré par le dispositif et contenant du flou,
- RR est le profil fréquentiel optimal de la même zone ZIC tel qu'il aurait du être généré si le dispositif n'avait pas engendré du flou.

Nous voyons que le rapport entre ces deux profils peut indiquer le gain pour chaque fréquence à apporter à RI pour retrouver RR. En revanche, il s'avère que l'application directe du gain calculer entre RI et RR peut générer des comportements indésirables notamment en hautes fréquences lorsque la zone à corriger ZIC comporte un niveau de bruit important. Ces phénomènes sont connus pour l'homme de l'art par effet d'oscillations de luminance appelées « ringing ». Selon l'invention, le procédé va estimer un profil RH compris entre RR et RI et dont la position est paramétrée en fonction du bruit dans la zone analysée ZIC.

Les figures 8a et 8b montrent deux exemples de profils PR qu'il est possible de générer selon l'invention. L'écart entre les profils RI et RR montre la perte fréquentielle introduite par le flou inhérent au dispositif.

La figure 8a traite le cas d'un niveau de bruit important dans la zone ZIC ; on aura intérêt de choisir un profil RH comprise entre RI et RR et telle que son effet soit moindre vers les hautes fréquences (l'extrémité de RH sera confondu avec RI) qui portent dans ce cas présent l'information liée au bruit dans l'image.

La figure 8b traite au contraire le cas d'un niveau de bruit très faible dans la zone ZIC ; les hautes fréquences de profil RI représentent donc du signal et non plus du bruit. On aura alors intérêt de choisir un profil RH entre RI et RR telle que le gain entre RH et RI demeure important même vers les hautes fréquences afin de renforcer la perception des détails dans la zone ZIC.

En aucun cas RH ne pourra dépasser RR qui est le profil idéal du dispositif mais ne correspond pas à une image réalisable par une dispositif réel. Compte tenu de la description précédente il est possible de choisir de multiples fonctions qui paramètrent une courbe du profil RH comprise entre RI et RR. Sur les figures 8a, 8b la base de représentation choisie pour les représentations RR et RI est celle de Fourier. L'axe des abscisses porte les fréquences du signal, celui des ordonnées porte le logarithme du module de la transformée de Fourier. Une façon notamment de procéder pour calculer une représentation de profil de RH est de rester tangent en basse fréquence au profil RR puis (figures 8a, 8b) d'utiliser une droite jusqu'aux point extrême caractérisant les hautes fréquences.

La construction de profil PR de rehaussement des fréquences se réalise immédiatement par le calcul du rapport de RH/RI pour l'ensemble des fréquences.

Correction bruit et /ou flou poly-chromatique

Le procédé de l'invention est applicable au traitement des images couleur. Une image couleur est considérée du point de vue du traitement logiciel de l'image comme comportant autant d'images (ou plans couleurs) qu'il y de couleurs de base dans l'image. C'est ainsi qu'une image IMrvb est considérée comme comportant les trois plans couleur Im-rouge, Im-vert, Im-bleu. De façon analogue une image IMcmjn peut être considérée comme comportant 4 plans couleur Im-cyan, Im-magenta, Im-jaune,, Imnoir. Dans le procédé précédemment décrit, chaque plan couleur sera traité indépendamment de façon à obtenir n images transformées qui recomposeront les différents plans couleurs de l'image finale transformée.

Réduction de la dynamique avant un appareil de restitution

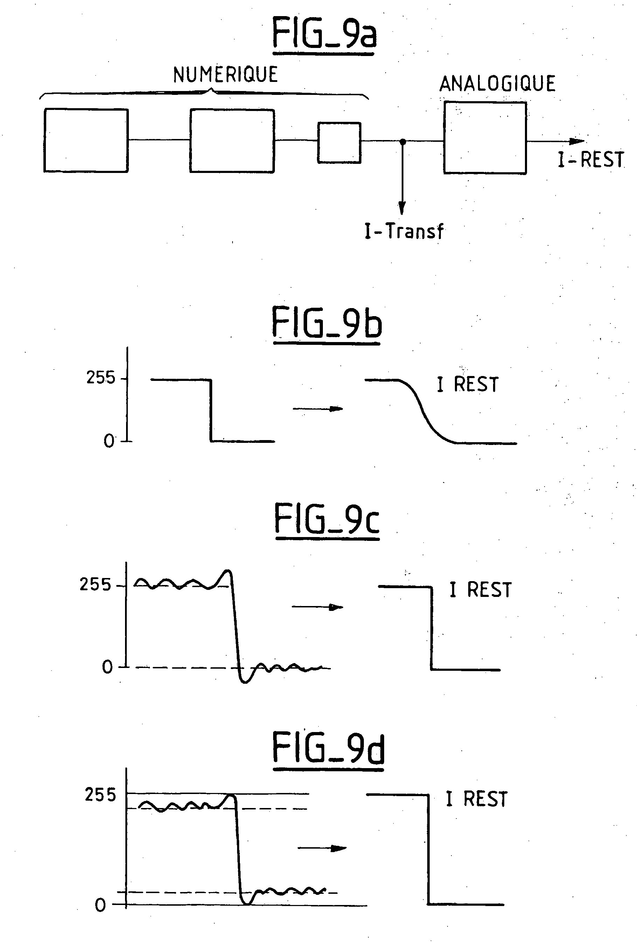

Le procédé de l'invention est applicable au calcul d'une image numérique transformée I-Transf, destinée à être visualisée via un moyen de restitution de dynamique connu (figure 9a) pour créer une image I-REST. Ce moyen de restitution, par exemple un projecteur, introduit intrinsèquement du flou au moment de la restitution, ce qui se traduit sur la figure 9b par exemple, par une atténuation du profil d'une transition en marche d'escalier. Afin d'obtenir une restitution plus favorable on a intérêt (figure 9c) à modifier en amont la dynamique de l'image transformée de manière à ce que l'image projetée ait un profil plus proche du profil idéal. Cette modification de dynamique n'est pas toujours réalisable du fait de la quantification de l'image transformée (généralement 8 bits). Pour palier cette difficulté, le procédé peut réduire la dynamique globale de l'image transformée (l'image devient moins contrastée donc moins énergétique). On peut lui appliquer les transformations nécessaires à la prise en compte du flou de l'appareil de restitution tout en restant dans la dynamique admissible de l'image (figure 9c) et compenser la baisse d'énergie au niveau de l'appareil de restitution lui même qui n'a plus de problème de quantification, en augmentant par exemple l'énergie au niveau des lampes pour un appareil de projection à lampe (figure 9d). Il résulte de cette combinaison des moyens techniques que l'appareil de restitution peut restituer des images de détails moins flous, notamment des caractères.

Application de l'invention à la réduction de coût

On appelle réduction de coût, un procédé et système pour diminuer le coût d'un appareil P25 ou d'une chaîne d'appareils P3, notamment le coût de l'optique d'un appareil ou d'une chaîne d'appareils; le procédé consistant à :

- diminuer le nombre de lentilles, et/ou
- simplifier la forme des lentilles, et/ou
- concevoir ou choisir dans un catalogue une optique ayant des défauts P5 plus importants que ceux souhaités pour l'appareil ou la chaîne d'appareils, et/ou
- utiliser des matériaux, composants, traitements ou procédés de fabrication moins coûteux pour l'appareil ou la chaîne d'appareils, ajoutant des défauts P5.

Le procédé et système selon l'invention peut être utilisé pour diminuer le coût d'un appareil ou d'une chaîne d'appareils : on peut concevoir une optique numérique, produire des informations formatées IF relatives aux défauts P5 de l'appareil ou à la chaîne d'appareils, utiliser ces informations formatées pour permettre à des moyens de traitement d'image, intégrés ou non, de modifier la qualité des images provenant ou destinées à l'appareil ou à la chaîne d'appareils, de sorte que la combinaison de l'appareil ou la chaîne d'appareil et des moyens de traitement d'image permettent de capturer, modifier ou restituer des images de la qualité souhaitée avec un coût réduit.

**Revendications**

**1.** Procédé pour obtenir une image transformée (I-Transf) à partir d'une image numérique (INUM) d'une chaîne d'appareils (P3) ; ladite chaîne d'appareils (P3) comportant des appareils (P25) de capture d'image et/ou des appareils de restitution d'image ; ladite chaîne d'appareils comportant au moins un appareil ; ledit procédé comprenant :

- l'étape de déterminer automatiquement des données caractéristiques à partir d'informations formatées (IF) relatives à des défauts (P5) de ladite chaîne d'appareils (P3) et/ou à partir de ladite image numérique lesdites données caractéristiques étant ci-après dénommées les données caractéristiques du bruit (DcB) ;
- l'étape de calculer ladite image transformée (I-Transf) à partir desdites informations formatées (IF) et desdites données caractéristiques du bruit (DcB) ;

le procédé comprenant en outre, pour déterminer les données caractéristiques du bruit :

- l'étape de sélectionner sur ladite image numérique (INUM) des zones d'analyse (ZAN), notamment en fonction des appareils (P25) de la chaîne d'appareils et/ou des informations formatées (IF),
- l'étape de calculer des variations locales de luminance (VLL) sur lesdites zones d'analyse (ZAN),
- l'étape de déduire lesdites données caractéristiques du bruit (DcB) en fonction d'un calcul statistique d'occurrence desdites variations locales sur l'ensemble desdites zones d'analyse (ZAN), cette déduction étant effectuée de la façon suivante :
- on construit un histogramme (HC1, HC2, HC3) des occurrences desdites variations locales de luminance (VLL), et
- on sélectionne sur ledit histogramme au moins une partie de la partie située avant le premier maximum local, y compris celui-ci ;

le procédé étant **caractérisé en ce qu'**il comprend en outre, pour sélectionner sur ladite image numérique (INUM) des zones d'analyse (ZAN), l'étape de classer lesdites zones d'analyse selon leur luminance moyenne, de manière à obtenir des classes (C1, C2, C3);
et **en ce qu'**il comprend en outre :

- l'étape de déduire les données caractéristiques du bruit (DcB) pour les zones d'analyse (ZANi, ZANj, ZANp) appartenant à la même classe,
- l'étape d'itérer la précédente étape pour chacune des classes (C1, C2, C3);

de sorte que l'on obtient ainsi des données caractéristiques du bruit (DcB) fonction de la luminance.

2. Procédé selon la revendication 1 ; lesdites informations formatées (IF) comportant lesdites données caractéristiques du bruit (DcB).

3. Procédé selon l'une quelconque des revendications 1 à 2 ; ledit procédé comprenant en outre l'étape de mettre eh oeuvre un algorithme de transformation pour réaliser une image numérique intermédiaire (I-Int) ;
ledit algorithme présentant l'avantage d'apporter des modifications souhaitées à ladite image numérique (INUM) mais présentant l'inconvénient d'augmenter le bruit de l'image numérique intermédiaire (I-Int).

4. Procédé selon la revendication 3; pour calculer une image transformée (I-Transf) à partir de ladite image numérique intermédiaire (I-Int) obtenue à partir de ladite image numérique (INUM), ledit procédé comprenant en outre l'étape de mettre en oeuvre une fonction ayant pour objet de modifier la luminance de l'image numérique (INUM) et ayant au moins pour arguments :

- la luminance (vx-int) d'un point de l'image numérique intermédiaire (px-int),
- les luminances (vx-num) d'une zone autour du point (px-num) correspondant de l'image numérique,
- des données caractéristiques du bruit (DcB);

de sorte que l'on obtient ainsi une image transformée (I-Transf) présentant les caractéristiques souhaitées et un niveau de bruit contrôlé.

5. Procédé selon la revendication 4; ladite image numérique intermédiaire (I-Int) étant composée de ladite image numérique (INUM).

6. Procédé selon l'une quelconque des revendications précédentes ; ledit procédé étant plus particulièrement destiné à calculer une image transformée (I-Transf ID) corrigée de tout ou partie du flou ; ledit procédé comprenant en outre les étapes suivantes :

- l'étape de sélectionner dans ladite image numérique (INUM) des zones d'images à corriger (ZIC),
- l'étape de construire, pour chaque zone d'images à corriger (ZIC) ainsi sélectionnée, un profil de rehaussement (PR) à partir desdites informations formatées (IF) et desdites données caractéristiques du bruit (DcB),
- l'étape de corriger chaque zone d'images à corriger (ZIC) ainsi sélectionnée en fonction dudit profil de rehaussement (PR), de manière à obtenir une zone d'image transformée,
- l'étape de combiner lesdites zones d'image transformées de manière à obtenir ladite image transformée (I-Transf ID) de ladite image numérique ;

de sorte que l'on obtient ainsi une image transformée déflouée.

7. Procédé selon la revendication 6 ; lesdites informations formatées (IF) permettant de déterminer, pour chaque zone image à corriger (ZIC), une représentation image (RI) et une représentation de référence (RR) dans une base (B) relative à la zone d'image à corriger (ZIC) ; ledit procédé étant tel que, pour construire un profil de rehaussement (PR) à partir des informations formatées (IF) et du bruit, il comprend en outre les étapes suivantes :

- l'étape de déterminer, le cas échéant en tenant compte du bruit, à partir de ladite représentation image (RI) et de ladite représentation de référence (RR) un profil (RH),
- l'étape de déterminer un opérateur paramétré permettant de passer de ladite représentation image (RI) audit profil (RH) ;

de sorte que l'ensemble des valeurs des paramètres dudit opérateur paramétré compose ledit profil de rehaussement (PR).

**8.** Procédé selon la revendication 7 ; ledit procédé comprenant en outre, pour corriger chaque zone d'images à corriger (ZIC) en fonction dudit profil de rehaussement (PR), les étapes suivantes :

- l'étape de représenter au moins en partie ladite zone d'image à corriger (ZIC) dans ladite base (B),
- l'étape d'appliquer ledit opérateur paramétré à ladite représentation obtenue au terme de l'étape précédente, de manière à obtenir une représentation corrigée de ladite zone d'image à corriger (ZIC),
- l'étape de substituer la représentation de ladite zone d'image à corriger (ZIC) par ladite représentation corrigée de ladite zone d'image à corriger (ZIC) de manière à obtenir une zone d'image transformée.

**9.** Procédé selon l'une quelconque des revendications 6 à 8 ; ledit procédé comprenant en outre l'étape de calculer une image ayant un niveau de bruit contrôlé (I-Transf IDBC), à partir de ladite image transformée, en mettant en oeuvre une fonction ayant pour objet de modifier la luminance de l'image numérique et ayant au moins pour arguments :

- la luminance d'un point de l'image numérique transformée,
- les luminances d'une zone autour du point correspondant de l'image numérique,
- des données caractéristiques du bruit (DcB);

de sorte que l'on obtienne ainsi une image déflouée (I-Transf IDBC) et ayant un niveau de bruit contrôlé.

**10.** Procédé selon l'une quelconque des revendications précédentes ; lesdites informations formatées dépendant de valeurs de caractéristiques variables selon l'image numérique, notamment la taille de ladite image numérique ; ledit procédé comprenant en outre l'étape de déterminer la ou les valeur(s) desdites caractéristiques variables, pour ladite image numérique.

**11.** Procédé selon l'une quelconque des revendications précédentes ; ledit procédé étant plus particulièrement destiné à calculer une image transformée à partir d'une image numérique et d'informations formatées relatives à des défauts d'une chaîne d'appareil comprenant au moins un appareil de restitution d'image ; ledit appareil de restitution ayant une dynamique ; ladite image transformée ayant une dynamique ; ledit procédé comprenant en outre l'étape d'adapter ladite dynamique de ladite image transformée à ladite dynamique dudit appareil de restitution.

**12.** Système pour obtenir une image transformée (I-Transf) à partir d'une image numérique (INUM) d'une chaîne d'appareils (P3); ladite chaîne d'appareils comportant des appareils (P25) de capture d'image et/ou des appareils de restitution d'image ; ladite chaîne d'appareils comportant au moins un appareil ;
ledit système comprenant

- des moyens de traitement informatique (dcb, MC1, MC2) pour déterminer automatiquement des données caractéristiques à partir d'informations formatées (IF) relatives à des défauts (P5) de ladite chaîne d'appareils (P3) et/ou à partir de ladite image numérique (INUM) ; lesdites données caractéristiques étant ci-après dénommées les données caractéristiques du bruit (DcB);
- des moyens de traitement informatique (dcb, MC1, MC2) pour calculer ladite image transformée (I-Transf) à partir desdites informations formatées (IF) et desdites données caractéristiques du bruit (DcB) ;

dans lequel les moyens de traitement informatique pour déterminer lesdites données caractéristiques du bruit (DcB) comprennent, en outre,
des moyens de sélection (SZ) pour sélectionner sur ladite image numérique (INUM) des zones d'analyse (ZAN), notamment en fonction des appareils de la chaîne d'appareils et/ou des informations formatées (IF),

- des moyens de calcul pour calculer des variations locales de luminance (VLL) sur lesdites zones d'analyse (ZAN),
- des moyens de déduction pour déduire lesdites des données caractéristiques du bruit (DcB) en fonction d'un calcul statistique d'occurrence desdites variations locales sur l'ensemble desdites zones d'analyse (ZAN).

lesdits moyens de déduction comprenant
des moyens pour construire un histogramme (HC1, HC2, HC3) des occurrences desdites variations locales de luminance (VLL),

- des moyens de sélection pour sélectionner sur ledit histogramme au moins une partie de la partie située avant le premier maximum local, y compris celui-ci ;

ledit système étant **caractérisé en ce qu'**il comprend en outre, pour sélectionner sur ladite image numérique (INUM) des zones d'analyse (ZAN), des moyens de classement pour classer lesdites zones d'analyse selon leur luminance moyenne, de manière à obtenir des classes (C1, C2, C3) ;
ledit système comprenant en outre des moyens de traitement informatique pour :

- déduire les données caractéristiques du bruit (DcB) pour les zones d'analyse (ZANi, ZANj, ZANp) appartenant à la même classe,
- itérer la précédente étape pour chacune des classes (C1, C2, C3) .

13. Système selon la revendication 12; lesdites informations formatées (IF) comportant lesdites données caractéristiques du bruit (DcB).

14. Système selon l'une quelconque des revendications 12 ou 13; ledit système comprenant en outre des moyens de traitement informatique (MC1) mettant en oeuvre un algorithme de transformation pour réaliser une image numérique intermédiaire (I-Int);
ledit algorithme présentant l'avantage d'apporter des modifications souhaitées à ladite image numérique (INUM) mais présentant l'inconvénient d'augmenter le bruit de l'image numérique intermédiaire (I-Int).

15. Système selon la revendication 14; pour calculer une image transformée (I-Transf) à partir de ladite image numérique intermédiaire (I-Int) obtenue à partir de ladite image numérique (INUM), ledit système comprenant des moyens de calcul (MC2) mettant en oeuvre une fonction ayant pour objet de modifier la luminance de l'image numérique et ayant au moins pour arguments :

- la luminance (vx-int) d'un point de l'image numérique intermédiaire (px-int),
- les luminances (vx-num) d'une zone autour du point (px-num) correspondant de l'image numérique,
- des données caractéristiques du bruit (DcB).

16. Système selon la revendication 15; ladite image numérique intermédiaire (I-Int) étant composée de ladite image numérique (INUM).

17. Système selon l'une quelconque des revendications 12 à 16; ledit système étant plus particulièrement destiné à calculer une image transformée (I-Transf ID) corrigée de tout ou partie du flou : ledit système comprenant en outre :

- des moyens de sélection pour sélectionner dans ladite image numérique (INUM) des zones d'images à corriger (ZIC),
- des moyens de calcul (dcb2, pr) pour construire, pour chaque zone d'images à corriger (ZIC) ainsi sélectionnée, un profil de rehaussement (PR) à partir desdites informations formatées et desdites données caractéristiques du bruit,
- des moyens de traitement informatique (zic) pour :
- corriger chaque zone d'images à corriger (ZIC) ainsi sélectionnée en fonction dudit profil de rehaussement (PR), de manière à obtenir une zone d'image transformée, et pour
- combiner lesdites zones d'image transformées de manière à obtenir ladite image transformée (I-Transf) de ladite image numérique (INUM).

18. Système selon la revendication 17 ; lesdites informations formatées (IF) permettant de déterminer, pour chaque zone image à corriger (ZIC), une représentation image (RI) et une représentation de référence (RR) dans une base (B) relative à la zone d'image à corriger (ZIC) ;
ledit système étant tel que lesdits moyens de calcul pour construire un profil de rehaussement (PR) à partir des informations formatées (IF) et du bruit, comprennent en outre des moyens pour déterminer:

- un profil (RH), le cas échéant en tenant compte du bruit, à partir de ladite représentation image (RI) et de ladite représentation de référence (RR),
- un opérateur paramétré permettant de passer de ladite représentation image (RI) audit profil (RH).

**19.** Système selon la revendication 18 ; lesdits moyens de traitement informatique pour corriger chaque zone d'images à corriger (ZIC) en fonction dudit profil de rehaussement (PR) comprenant des moyens de calcul pour :

- représenter au moins en partie ladite zone d'image à corriger (ZIC) dans ladite base (B),
- appliquer ledit opérateur paramétré à ladite représentation de ladite zone d'image à corriger (ZIC), de manière à obtenir une représentation corrigée de ladite zone d'image à corriger (ZIC),
- substituer la représentation de ladite zone d'image à corriger (ZIC) par ladite représentation corrigée de ladite zone d'image à corriger (ZIC) de manière à obtenir une zone d'image transformée.

**20.** Système selon l'une quelconque des revendications 17 à 19 ; ledit système comprenant en outre des moyens de calcul pour calculer une image ayant un niveau de bruit contrôlé (I-Transf IDBC), à partir de ladite image transformée, en mettant en oeuvre une fonction ayant pour objet de modifier la luminance de l'image numérique et ayant au moins pour arguments :

- la luminance d'un point de l'image numérique transformée,
- les luminances d'une zone autour du point correspondant de l'image numérique,
- des données caractéristiques du bruit.

**21.** Système selon l'une quelconque des revendications 12 à 20 ; lesdites informations formatées dépendant de valeurs de caractéristiques variables selon l'image numérique; notamment la taille de ladite image numérique ; ledit système comprenant en outre des moyens de calcul pour déterminer la ou les valeur(s) desdites caractéristiques variables, pour ladite image numérique.

**22.** Système selon l'une quelconque des revendications 12 à 21 ; ledit système étant plus particulièrement destiné à calculer une image transformée à partir d'une image numérique et d'informations formatées relatives à des défauts d'une chaîne d'appareil comprenant au moins un appareil de restitution d'image ; ledit appareil de restitution ayant une dynamique ; ladite image transformée ayant une dynamique ; ledit système comprenant en outre des moyens de traitement informatique pour adapter ladite dynamique de ladite image transformée à ladite dynamique dudit appareil de restitution.

**Patentansprüche**

**1.** Verfahren zum Erhalt eines umgewandelten Bilds (I-Transf) ausgehend von einem digitalen Bild (INUM) von einer Gerätekette (P3), wobei die Gerätekette (P3) Bilderfassungsgeräte (P25) und/oder Bildwiedergabegeräte aufweist, wobei die Gerätekette mindestens ein Gerät aufweist,
wobei das Verfahren enthält:

- den Schritt der automatischen Bestimmung charakteristischer Daten ausgehend von formatierten Informationen (IF) bezüglich von Fehlern (PS) der Gerätekette (P3) und/oder ausgehend vom digitalen Bild, wobei die charakteristischen Daten nachfolgend als charakteristische Rauschdaten (DcB) bezeichnet werden,
- den Schritt der Berechnung des umgewandelten Bilds (I-Transf) ausgehend von den formatierten Informationen (IF) und von den charakteristischen Rauschdaten (DcB),

wobei das Verfahren außerdem zur Bestimmung der charakteristischen Rauschdaten enthält:

- den Schritt der Auswahl von Analysezonen (ZAN) im digitalen Bild (INUM), insbesondere abhängig von den Geräten (P25) der Gerätekette und/oder von den formatierten Informationen (IF),
- den Schritt der Berechnung der lokalen Leuchtdichteschwankungen (VLL) in den Analysezonen (ZAN),
- den Schritt der Ableitung der charakteristischen Rauschdaten (DcB) abhängig von einer statistischen Berechnung des Auftretens der lokalen Schwankungen über die Gesamtheit der Analysezonen (ZAN), wobei diese Ableitung folgendermaßen erfolgt:

- es wird ein Histogramm (HC1, HC2, HC3) des Auftretens der lokalen Leuchtdichteschwankungen (VLL) erstellt, und

- aus dem Histogramm wird zumindest ein Teil des Teils ausgewählt, der sich vor dem ersten lokalen Maximum einschließlich diesem befindet,

wobei das Verfahren **dadurch gekennzeichnet ist, dass** es außerdem zur Auswahl der Analysezonen (ZAN) im digitalen Bild (INUM) den Schritt der Einordnung der Analysezonen entsprechend ihrer mittleren Leuchtdichte enthält, um Klassen (CI, C2, C3) zu erhalten, und dass es außerdem enthält:

- den Schritt der Ableitung der charakteristischen Rauschdaten (DcB) für die zur gleichen Klasse gehörenden Analysezonen (ZANi, ZANj, ZANp),
- den Schritt der Wiederholung des vorhergehenden Schritts für jede der Klassen (C1, C2, C3),

damit so charakteristische Rauschdaten (DcB) abhängig von der Leuchtdichte erhalten werden.

2. Verfahren nach Anspruch 1, wobei die formatierten Informationen (IF) die charakteristischen Rauschdaten (DcB) enthalten.

3. Verfahren nach einem der Ansprüche 1 bis 2, wobei das Verfahren außerdem den Schritt der Anwendung eines Umwandlungsalgorithmus enthält, um ein digitales Zwischenbild (I-Int) herzustellen, wobei der Algorithmus den Vorteil hat, am digitalen Bild (INUM) gewünschte Änderungen vorzunehmen, aber den Nachteil hat, das Rauschen des digitalen Zwischenbilds (I-Int) zu erhöhen.

4. Verfahren nach Anspruch 3, um ausgehend vom ausgehend vom digitalen Bild (INUM) erhaltenen digitalen Zwischenbild (I-Int) ein umgewandeltes Bild (I-Transf) zu berechnen, wobei das Verfahren außerdem den Schritt der Anwendung einer Funktion enthält, die zum Ziel hat, die Leuchtdichte des digitalen Bilds (INUM) zu ändern, und die zumindest als Argumente hat:

- die Leuchtdichte (vx-int) eines Punkts des digitalen Zwischenbilds (px-int),
- die Leuchtdichten (vx-num) einer Zone um den entsprechenden Punkt (px-num) des digitalen Bilds,
- charakteristische Rauschdaten (DcB),

damit so ein umgewandeltes Bild (I-Transf) erhalten wird, das die gewünschten Eigenschaften und einen kontrollierten Rauschpegel aufweist.

5. Verfahren nach Anspruch 4, wobei das digitale Zwischenbild (I-Int) aus dem digitalen Bild (INUM) besteht.

6. Verfahren nach einem der vorhergehenden Ansprüche, wobei das Verfahren insbesondere dazu bestimmt ist, ein umgewandeltes Bild (I-Transf ID) zu berechnen, in dem die ganze oder ein Teil der Unschärfe korrigiert wurde, wobei das Verfahren außerdem die folgenden Schritte enthält:

- den Schritt der Auswahl von zu korrigierenden Bildzonen (ZIC) im digitalen Bild (INUM),
- den Schritt der Erstellung, für jede so ausgewählte zu korrigierende Bildzone (ZIC), eines Kontrastverstärkungsprofils (PR) ausgehend von den formatierten Informationen (IF) und von den charakteristischen Rauschdaten (DcB),
- den Schritt der Korrektur jeder so ausgewählten zu korrigierenden Bildzone (ZIC) abhängig vom Kontrastverstärkungsprofil (PR), um eine umgewandelte Bildzone zu erhalten,
- den Schritt der Kombination der umgewandelten Bildzonen, um das umgewandelte Bild (I-Transf ID) des digitalen Bilds zu erhalten,

damit so ein von Unschärfe befreites umgewandeltes Bild erhalten wird.

7. Verfahren nach Anspruch 6, wobei die formatierten Informationen (IF) es ermöglichen, für jede zu korrigierende Bildzone (ZIC) eine Bilddarstellung (RI) und eine Bezugsdarstellung (RR) in einer Bank (B) bezüglich der zu korrigierenden Bildzone (ZIC) zu bestimmen, wobei das Verfahren so ist, dass es zur Erstellung eines Kontrastverstärkungsprofils (PR) ausgehend von den formatierten Informationen (IF) und vom Rauschen außerdem die folgenden Schritte enthält:

- den Schritt der Bestimmung eines Profils (RH), ggf. unter Berücksichtigung des Rauschens, ausgehend von der Bilddarstellung (RI) und von der Bezugsdarstellung (RR),

- den Schritt der Bestimmung eines parametrierten Operators, der es ermöglicht, von der Bilddarstellung (RI) zum Profil (RH) überzugehen,

damit die Gesamtheit der Werte der Parameter des parametrierten Operators das Kontrastverstärkungsprofil (PR) bildet.

8. Verfahren nach Anspruch 7, wobei das Verfahren außerdem zur Korrektur jeder zu korrigierenden Bildzone (ZIC) abhängig vom Kontrastverstärkungsprofil (PR) die folgenden Schritte enthält:

- den Schritt der zumindest teilweisen Darstellung der zu korrigierenden Bildzone (ZIC) in der Bank (B),
- den Schritt der Anwendung des parametrierten Operators an die am Ende des vorhergehenden Schritts erhaltene Darstellung, um eine korrigierte Darstellung der zu korrigierenden Bildzone (ZIC) zu erhalten,
- den Schritt des Ersatzes der Darstellung der zu korrigierenden Bildzone (ZIC) durch die korrigierte Darstellung der zu korrigierenden Bildzone (ZIC), um eine umgewandelte Bildzone zu erhalten.

9. Verfahren nach einem der Ansprüche 6 bis 8, wobei das Verfahren außerdem den Schritt der Berechnung eines Bilds mit einem kontrollierten Rauschpegel (I-Transf IDBC) ausgehend vom umgewandelten Bild enthält, indem eine Funktion angewendet wird, die zum Ziel hat, die Leuchtdichte des digitalen Bilds zu verändern und zumindest als Argumente hat:

- die Leuchtdichte eines Punkts des umgewandelten digitalen Bilds,
- die Leuchtdichten einer Zone um den entsprechenden Punkts des digitalen Bilds,
- charakteristische Rauschdaten (DcB),

damit so ein Bild mit entfernter Unschärfe (I-Transf IDBC) und mit einem kontrollierten Rauschpegel erhalten wird.

10. Verfahren nach einem der vorhergehenden Ansprüche, wobei die formatierten Informationen von Werten von gemäß dem digitalen Bild variablen Eigenschaften abhängen, insbesondere von der Größe des digitalen Bilds, wobei das Verfahren außerdem den Schritt der Bestimmung des oder der Werte der variablen Eigenschaften für das digitale Bild enthält.

11. Verfahren nach einem der vorhergehenden Ansprüche, wobei das Verfahren insbesondere dazu bestimmt ist, ein umgewandeltes Bild ausgehend von einem digitalen Bild und formatierten Informationen bezüglich von Fehlern einer Gerätekette zu berechnen, die mindestens ein Bildwiedergabegerät enthält, wobei das Wiedergabegerät eine Dynamik hat, wobei das umgewandelte Bild eine Dynamik hat, wobei das Verfahren außerdem den Schritt der Anpassung der Dynamik des umgewandelten Bilds an die Dynamik des Wiedergabegeräts enthält.

12. System zum Erhalt eines umgewandelten Bilds (I-Transf) ausgehend von einem digitalen Bild (INUM) einer Gerätekette (P3), wobei die Gerätekette Bilderfassungsgeräte (P25) und/oder Bildwiedergabegeräte enthält, wobei die Gerätekette mindestens ein Gerät aufweist,
wobei das System enthält

- Datenverarbeitungseinrichtungen (dcb, MC1, MC2), um automatisch charakteristische Daten ausgehend von formatierten Informationen (IF) bezüglich von Fehlern (P5) der Gerätekette (P3) und/oder ausgehend vom digitalen Bild (INUM) zu bestimmen, wobei die charakteristischen Daten nachfolgend als charakteristische Rauschdaten (DcB) bezeichnet werden,
- Datenverarbeitungseinrichtungen (dcb, MC1, MC2), um das umgewandelte Bild (I-Transf) ausgehend von den formatierten Informationen (IF) und von den charakteristischen Rauschdaten (DcB) zu berechnen,

wobei die Datenverarbeitungseinrichtungen zur Bestimmung der charakteristischen Rauschdaten (DcB) außerdem enthalten

- Auswahleinrichtungen (SZ), um im digitalen Bild (INUM) Analysezonen (ZAN) insbesondere abhängig von den Geräten der Gerätekette und/oder von den formatierten Informationen (IF) auszuwählen,
- Recheneinrichtungen, um lokale Leuchtdichteschwankungen (VLL) in den Analysezonen (ZAN) zu berechnen,
- Ableitungseinrichtungen, um die charakteristischen Rauschdaten (DcB) abhängig von einer statistischen Berechnung des Auftretens der lokalen Schwankungen in der Gesamtheit der Analysezonen (ZAN) abzuleiten,

wobei die Ableitungseinrichtungen enthalten

- Einrichtungen zur Erstellung eines Histogramms (HC1, HC2, HC3) des Auftretens der lokalen Leuchtdichteschwankungen (VLL),
- Auswahleinrichtungen, um im Histogramm mindestens einen Teil des Teils auszuwählen, der sich vor dem ersten lokalen Maximum einschließlich diesem befindet,

wobei das System **dadurch gekennzeichnet ist, dass** es außerdem zur Auswahl von Analysezonen (ZAN) im digitalen Bild (INUM) Einordnungseinrichtungen enthält, um die Analysezonen gemäß ihrer mittleren Leuchtdichte einzuordnen, um Klassen (C1, C2, C3) zu erhalten,
wobei das System außerdem Datenverarbeitungseinrichtungen enthält, um:

- die charakteristischen Rauschdaten (DcB) für die Analysezonen (ZANi, ZANj, ZANp) abzuleiten, die zur gleichen Klasse gehören,
- den vorhergehenden Schritt für jede der Klassen (CI, C2, C3) zu wiederholen.

13. System nach Anspruch 12, wobei die formatierten Informationen (IF) die charakteristischen Rauschdaten (DcB) aufweisen.

14. System nach einem der Ansprüche 12 oder 13, wobei das System außerdem Datenverarbeitungseinrichtungen (MC1) enthält, die einen Umwandlungsalgorithmus anwenden, um ein digitales Zwischenbild (I-Int) herzustellen, wobei der Algorithmus den Vorteil hat, am digitalen Bild (INUM) gewünschte Veränderungen vorzunehmen, aber den Nachteil hat, das Rauschen des digitalen Zwischenbilds (I-Int) zu erhöhen.

15. System nach Anspruch 14 zur Berechnung eines umgewandelten Bilds (I-Transf) ausgehend von dem ausgehend vom digitalen Bild (INUM) erhaltenen digitalen Zwischenbild (I-Int), wobei das System Recheneinrichtungen (MC2) enthält, die eine Funktion anwenden, die zum Ziel hat, die Leuchtdichte des digitalen Bilds zu verändern und mindestens als Argumente hat

- die Leuchtdichte (vx-int) eines Punkts des digitalen Zwischenbilds (px-int),
- die Leuchtdichten (vx-num) einer Zone um den entsprechenden Punkt (px-num) des digitalen Bilds,
- charakteristische Rauschdaten (DcB).

16. System nach Anspruch 15, wobei das digitale Zwischenbild (I-Int) aus dem digitalen Bild (INUM) besteht.

17. System nach einem der Ansprüche 12 bis 16, wobei das System insbesondere dazu bestimmt ist, ein um die ganze oder einen Teil der Unschärfe korrigiertes umgewandeltes Bild (I-Transf ID) zu berechnen, wobei das System außerdem enthält:

- Auswahleinrichtungen zur Auswahl von zu korrigierenden Bildzonen (ZIC) im digitalen Bild (INUM),
- Recheneinrichtungen (dcb2, pr) zur Erstellung, für jede so ausgewählte zu korrigierende Bildzone (ZIC), eines Kontrastverstärkungsprofils (PR) ausgehend von den formatierten Informationen und von den charakteristischen Rauschdaten,
- Datenverarbeitungseinrichtungen (zic), um:

- jede so ausgewählte zu korrigierende Bildzone (ZIC) abhängig vom Kontrastverstärkungsprofil (PR) zu korrigieren, um eine umgewandelte Bildzone zu erhalten, und um
- die umgewandelten Bildzonen so zu kombinieren, dass das umgewandelte Bild (I-Transf) des digitalen Bilds (INUM) erhalten wird.

18. System nach Anspruch 17, wobei die formatierten Informationen (IF) es ermöglichen, für jede zu korrigierende Bildzone (ZIC) eine Bilddarstellung (RI) und eine Bezugsdarstellung (RR) in einer Bank (B) bezüglich der zu korrigierenden Bildzone (ZIC) zu bestimmen, wobei das System so ist, dass die Recheneinrichtungen zur Erstellung eines Kontrastverstärkungsprofils (PR) ausgehend von den formatierten Informationen (IF) und vom Rauschen außerdem Einrichtungen enthalten, um zu bestimmen:

- ein Profil (RH), ggf. unter Berücksichtigung des Rauschens, ausgehend von der Bilddarstellung (RI) und von der Bezugsdarstellung (RR),

- einen parametrierten Operator, der es ermöglicht, von der Bilddarstellung (RI) zum Profil (RH) überzugehen.

**19.** System nach Anspruch 18, wobei die Datenverarbeitungseinrichtungen zur Korrektur jeder zu korrigierenden Bildzone (ZIC) abhängig vom Kontrastverstärkungsprofil (PR) Recheneinrichtungen enthalten, um:

- zumindest zum Teil die zu korrigierende Bildzone (ZIC) in der Bank (B) darzustellen,
- den parametrierten Operator an die Darstellung der zu korrigierenden Bildzone (ZIC) anzuwenden, um eine korrigierte Darstellung der zu korrigierenden Bildzone (ZIC) zu erhalten,
- die Darstellung der zu korrigierenden Bildzone (ZIC) durch die korrigierte Darstellung der zu korrigierenden Bildzone (ZIC) zu ersetzen, um eine umgewandelte Bildzone zu erhalten.

**20.** System nach einem der Ansprüche 17 bis 19, wobei das System außerdem Recheneinrichtungen enthält, um ausgehend vom umgewandelten Bild ein Bild mit einem kontrollierten Rauschpegel (I-Transf IDBC) zu berechnen, indem eine Funktion angewendet wird, die zum Ziel hat, die Leuchtdichte des digitalen Bilds zu verändern, und mindestens als Argumente hat:

- die Leuchtdichte eines Punkts des umgewandelten digitalen Bilds,
- die Leuchtdichten einer Zone um den entsprechenden Punkt des digitalen Bilds,
- charakteristische Rauschdaten.

**21.** System nach einem der Ansprüche 12 bis 20, wobei die formatierten Informationen von gemäß dem digitalen Bild variablen Eigenschaften abhängen, insbesondere von der Größe des digitalen Bilds, wobei das System außerdem Recheneinrichtungen enthält, um den oder die Werte der variablen Eigenschaften für das digitale Bild zu bestimmen.

**22.** System nach einem der Ansprüche 12 bis 21, wobei das System insbesondere dazu bestimmt ist, ein umgewandeltes Bild ausgehend von einem digitalen Bild und von formatierten Informationen bezüglich von Fehlern einer Gerätekette zu berechnen, die mindestens ein Bildwiedergabegerät enthält, wobei das Wiedergabegerät eine Dynamik hat, wobei das umgewandelte Bild eine Dynamik hat, wobei das System außerdem Datenverarbeitungseinrichtungen enthält, um die Dynamik des umgewandelten Bilds an die Dynamik des Wiedergabegeräts anzupassen.

**Claims**

**1.** Method for obtaining a transformed image (I-Transf) on the basis of a digital image (INUM) of a string of apparatuses (P3); the said string of apparatuses (P3) comprising image capture apparatuses (P25) and/or image restitution apparatuses; the said string of apparatuses comprising at least one apparatus;
the said method comprising:

- the step of automatically determining characteristic data on the basis of formatted information (IF) relating to defects (P5) of the said string of apparatuses (P3) and/or on the basis of the said digital image; the said characteristic data being hereinafter dubbed the data characteristic of the noise (DcB);
- the step of calculating the said transformed image (I-Transf) on the basis of the said formatted information (IF) and of the said data characteristic of the noise (DcB);

the method furthermore comprising, to determine the data characteristic of the noise:

- the step of selecting on the said digital image (INUM) analysis zones (ZAN), especially as a function of the apparatuses (P25) of the string of apparatuses and/or of the formatted information (IF),
- the step of calculating local variations of luminance (VLL) over the said analysis zones (ZAN),
- the step of deducing the said data characteristic of the noise (DcB) as a function of a statistical calculation of occurrence of the said local variations over the set of said analysis zones (ZAN), this deduction being performed in the following manner:
- a histogram (HC1,HC2,HC3) of the occurrences of the said local variations of luminance (VLL) is constructed, and
- at least one part of the part situated before the first local maximum, including the latter, is selected on the said histogram;

the method being **characterized in that** it furthermore comprises, to select on the said digital image (INUM) analysis zones (ZAN), the step of classing the said analysis zones according to their average luminance, so as to obtain classes (C1,C2,C3);
and **in that** it furthermore comprises:

- the step of deducing the data characteristic of the noise (DcB) for the analysis zones (ZANi, ZANj, ZANp) belonging to the same class,
- the step of iterating the previous step for each of the classes (C1,C2,C3);

so that data characteristic of the noise (DcB) depending on the luminance are thus obtained.

2. Method according to Claim 1; the said formatted information (IF) comprising the said data characteristic of the noise (DcB).

3. Method according to any one of Claims 1 to 2; the said method furthermore comprising the step of implementing a transformation algorithm to produce an intermediate digital image (I-Int);
the said algorithm exhibiting the advantage of affording desired modifications to the said digital image (INUM) but exhibiting the drawback of increasing the noise of the intermediate digital image (I-Int).

4. Method according to Claim 3; to calculate a transformed image (I-Transf) on the basis of the said intermediate digital image (I-Int) obtained on the basis of the said digital image (INUM), the said method furthermore comprising the step of implementing a function whose object is to modify the luminance of the digital image (INUM) and whose arguments are at least:

- the luminance (vx-int) of a point of the intermediate digital image (px-int),
- the luminances (vx-num) of a zone around the corresponding point (px-num) of the digital image,
- data characteristic of the noise (DcB);

so that a transformed image (I-Transf) exhibiting the desired characteristics and a controlled noise level is thus obtained.

5. Method according to Claim 4; the said intermediate digital image (I-Int) being composed of the said digital image (INUM).

6. Method according to any one of the preceding claims; the said method being more particularly intended to calculate a transformed image (I-Transf ID) corrected of all or part of the blur; the said method furthermore comprising the following steps:

- the step of selecting in the said digital image (INUM) zones of images to be corrected (ZIC),
- the step of constructing, for each zone of images to be corrected (ZIC) thus selected, an enhancement profile (PR) on the basis of the said formatted information (IF) and of the said data characteristic of the noise (DcB),
- the step of correcting each zone of images to be corrected (ZIC) thus selected as a function of the said enhancement profile (PR), so as to obtain a transformed image zone,
- the step of combining the said transformed image zones so as to obtain the said transformed image (I- Transf ID) of the said digital image;

so that a deblurred transformed image is thus obtained.

7. Method according to Claim 6; the said formatted information (IF) making it possible to determine, for each image zone to be corrected (ZIC), an image representation (RI) and a reference representation (RR) in a base (B) relating to the image zone to be corrected (ZIC); the said method being such that, to construct an enhancement profile (PR) on the basis of the formatted information (IF) and of the noise, it furthermore comprises the following steps:

- the step of determining, if appropriate while taking account of the noise, on the basis of the said image representation (RI) and of the said reference representation (RR) a profile (RH),
- the step of determining a parametrized operator making it possible to pass from the said image representation (RI) to the said profile (RH);

so that the said enhancement profile (PR) is composed of the set of values of the parameters of the said parametrized operator.

8. Method according to Claim 7; the said method furthermore comprising, to correct each zone of images to be corrected (ZIC) as a function of the said enhancement profile (PR), the following steps:

   - the step of representing at least in part the said image zone to be corrected (ZIC) in the said base (B),
   - the step of applying the said parametrized operator to the said representation obtained on completion of the previous step, so as to obtain a corrected representation of the said image zone to be corrected (ZIC),
   - the step of substituting the representation of the said image zone to be corrected (ZIC) with the said corrected representation of the said image zone to be corrected (ZIC) so as to obtain a transformed image zone.

9. Method according to any one of Claims 6 to 8; the said method furthermore comprising the step of calculating an image having a controlled noise level (I-Transf IDBC), on the basis of the said transformed image, by implementing a function whose object is to modify the luminance of the digital image and whose arguments are at least:

   - the luminance of a point of the transformed digital image,
   - the luminances of a zone around the corresponding point of the digital image,
   - data characteristic of the noise (DcB);

   so that a deblurred image (I-Transf IDBC) having a controlled noise level is thus obtained.

10. Method according to any one of the preceding claims; the said formatted information depending on values of characteristics that are variable according to the digital image, especially the size of the said digital image; the said method furthermore comprising the step of determining the value or values of the said variable characteristics, for the said digital image.

11. Method according to any one of the preceding claims; the said method being more particularly intended to calculate a transformed image on the basis of a digital image and of formatted information relating to defects of an apparatus string comprising at least one image restitution apparatus; the said restitution apparatus having a dynamic range; the said transformed image having a dynamic range; the said method furthermore comprising the step of adapting the said dynamic range of the said transformed image to the said dynamic range of the said restitution apparatus.

12. System for obtaining a transformed image (I-Transf) on the basis of a digital image (INUM) of a string of apparatuses (P3); the said string of apparatuses comprising image capture apparatuses (P25) and/or image restitution apparatuses; the said string of apparatuses comprising at least one apparatus;
   the said system comprising

   - computerized processing means (dcb, MC1, MC2) for automatically determining characteristic data on the basis of formatted information (IF) relating to defects (P5) of the said string of apparatuses (P3) and/or on the basis of the said digital image (INUM); the said characteristic data being hereinafter dubbed the data characteristic of the noise (DcB);
   - computerized processing means (dcb, MC1, MC2) for calculating the said transformed image (I-Transf) on the basis of the said formatted information (IF) and of the said data characteristic of the noise (DcB);

   in which the computerized processing means for determining the said data characteristic of the noise (DcB) furthermore comprise:

   - selection means (SZ) for selecting on the said digital image (INUM) analysis zones (ZAN), especially as a function of the apparatuses of the string of apparatuses and/or of the formatted information (IF),
   - calculation means for calculating local variations of luminance (VLL) over the said analysis zones (ZAN),
   - deduction means for deducing the said of the data characteristic of the noise (DcB) as a function of a statistical calculation of occurrence of the said local variations over the set of said analysis zones (ZAN).

   the said deduction means comprising
   means for constructing a histogram (HC1,HC2,HC3) of the occurrences of the said local variations of luminance (VLL),

   - selection means for selecting on the said histogram at least one part of the part situated before the first local maximum, including the latter;

the said system being **characterized in that** it furthermore comprises, to select on the said digital image (INUM) analysis zones (ZAN), classing means for classing the said analysis zones according to their average luminance, so as to obtain classes (C1,C2,C3);
the said system furthermore comprising computerized processing means for:

- deducing the data characteristic of the noise (DcB) for the analysis zones (ZANi, ZANj, ZANp) belonging to the same class,
- iterating the previous step for each of the classes (C1,C2,C3).

13. System according to Claim 12; the said formatted information (IF) comprising the said data characteristic of the noise (DcB).

14. System according to any one of Claims 12 and 13; the said system furthermore comprising computerized processing means (MC1) implementing a transformation algorithm to produce an intermediate digital image (I-Int);
the said algorithm exhibiting the advantage of affording desired modifications to the said digital image (INUM) but exhibiting the drawback of increasing the noise of the intermediate digital image (I-Int).

15. System according to Claim 14; for calculating a transformed image (I-Transf) on the basis of the said intermediate digital image (I-Int) obtained on the basis of the said digital image (INUM), the said system comprising calculation means (MC2) implementing a function whose object is to modify the luminance of the digital image and whose arguments are at least:

- the luminance (vx-int) of a point of the intermediate digital image (px-int),
- the luminances (vx-num) of a zone around the corresponding point (px-num) of the digital image,
- data characteristic of the noise (DcB).

16. System according to Claim 15; the said intermediate digital image (I-Int) being composed of the said digital image (INUM).

17. System according to any one of Claims 12 to 16; the said system being more particularly intended to calculate a transformed image (I-Transf ID) corrected of all or part of the blur; the said system furthermore comprising:

- selection means for selecting in the said digital image (INUM) zones of images to be corrected (ZIC),
- calculation means (dcb2, pr) for constructing, for each zone of images to be corrected (ZIC) thus selected, an enhancement profile (PR) on the basis of the said formatted information and of the said data characteristic of the noise,
- computerized processing means (zic) for:
- correcting each zone of images to be corrected (ZIC) thus selected as a function of the said enhancement profile (PR), so as to obtain a transformed image zone, and for
- combining the said transformed image zones so as to obtain the said transformed image (I-Transf) of the said digital image (INUM).

18. System according to Claim 17; the said formatted information (IF) making it possible to determine, for each image zone to be corrected (ZIC), an image representation (RI) and a reference representation (RR) in a base (B) relating to the image zone to be corrected (ZIC);
the said system being such that the said calculation means for constructing an enhancement profile (PR) on the basis of the formatted information (IF) and of the noise, furthermore comprise means for determining:

- a profile (RH), if appropriate while taking account of the noise, on the basis of the said image representation (RI) and of the said reference representation (RR),
- a parametrized operator making it possible to pass from the said image representation (RI) to the said profile (RH).

19. System according to Claim 18; the said computerized processing means for correcting each zone of images to be corrected (ZIC) as a function of the said enhancement profile (PR) comprising calculation means for:

- representing at least in part the said image zone to be corrected (ZIC) in the said base (B),
- applying the said parametrized operator to the said representation of the said image zone to be corrected (ZIC), so as to obtain a corrected representation of the said image zone to be corrected (ZIC),
- substituting the representation of the said image zone to be corrected (ZIC) with the said corrected representation of the said image zone to be corrected (ZIC) so as to obtain a transformed image zone.

20. System according to any one of Claims 17 to 19; the said system furthermore comprising calculation means for calculating an image having a controlled noise level (I-Transf IDBC), on the basis of the said transformed image, by implementing a function whose object is to modify the luminance of the digital image and whose arguments are at least:

- the luminance of a point of the transformed digital image,
- the luminances of a zone around the corresponding point of the digital image,
- data characteristic of the noise.

21. System according to any one of Claims 12 to 20; the said formatted information depending on values of characteristics that are variable according to the digital image, especially the size of the said digital image; the said system furthermore comprising calculation means for determining the value or values of the said variable characteristics, for the said digital image.

22. System according to any one of Claims 12 to 21; the said system being more particularly intended to calculate a transformed image on the basis of a digital image and of formatted information relating to defects of an apparatus string comprising at least one image restitution apparatus; the said restitution apparatus having a dynamic range; the said transformed image having a dynamic range; the said system furthermore comprising computerized processing means for adapting the said dynamic range of the said transformed image to the said dynamic range of the said restitution apparatus.

P3 → (IF)

FIG_1

Px-num.1

Px-num
(vx-num)

INUM

Px-int.1

Px-int
(vx-int)

Px-num.n

P25

Px-int.n

I-Int

CAPP

Px-tr.1

Px-tr
(vx-tr)

I-Transf

Px-tr.n

FIG_2

INUM

INUM li

I-Transf
li

CAPP

# FIG_3

SZ

INUM

P3

$$Z1_{an} \quad Z2_{an} \quad Z3_{an}$$

$$Zj_{an}$$

$$Zp_{an}$$

$$I = \sum_{i=1}^{i=p} ZAN_i$$

## FIG_4a

| 10 | 12 | 13 |
|----|----|----|
| 04 | 05 | 02 |
| 01 | 20 | 30 |

## FIG_4b

Fréquences d'apparitions

22

0    50                    255    VLL (Max-min)

Zone de bruit

## FIG_4c

fm

fm/2

Xb          Xm
Tbruit    Max-Min
au premier mode

## FIG_5

**ZANi**

| 001 | 005 | 007 |
|-----|-----|-----|
| 002 | 009 | 010 |
| 012 | 003 | 004 |

$(0 \leqslant \overline{VLL} < 80)$

$\overline{VLL} = 011$
$\overline{VLL} = 5,8$

HC1
C1

0    10  11

**ZANj**

| 120 | 121 | 119 |
|-----|-----|-----|
| 112 | 117 | 125 |
| 113 | 123 | 130 |

$(80 \leqslant \overline{VLL} < 160$

$\overline{VLL} = 017$
$\overline{VLL} = 120$

HC2
C2

10  17

**ZANp**

| 200 | 200 | 201 |
|-----|-----|-----|
| 210 | 207 | 207 |
| 201 | 208 | 211 |

$(160 \leqslant \overline{VLL} < 256)$

$\overline{VLL} = 011$
$\overline{VLL} = 205$

HC3
C3

# FIG_6

Px-num.j INUM

Px-int.j I-Int

MC1

ZAN-j

DcB —Rj→ MC2

dcb

$vx\text{-}tr = Rj\,(vx\text{-}num) + (1-Rj)\,(vx\text{-}int)$

Px-tr.j

I-Transf

# FIG_7a

# FIG_7b

Bruit fort

FIG_8a

RR

RH

RI

PR

Bruit faible

FIG_8b

RR

RH

RI

PR

# FIG_9a

NUMERIQUE

ANALOGIQUE

→ I-REST

I-Transf

# FIG_9b

255 —

0 —

→

I REST

# FIG_9c

255 —

0 —

→

I REST

# FIG_9d

255 —

0 —

→

I REST

EP 1 410 331 B1

# FIG_10

36

**EP 1 410 331 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5694484 A